(19) Europäisches Patentamt
European Patent Office
Office européen des brevets

(11) **EP 4 082 777 A1**

(12) **EUROPEAN PATENT APPLICATION**
published in accordance with Art. 153(4) EPC

(43) Date of publication:
**02.11.2022 Bulletin 2022/44**

(21) Application number: **20905999.7**

(22) Date of filing: **24.12.2020**

(51) International Patent Classification (IPC):
**B32B 27/00** (2006.01)    **C09K 3/10** (2006.01)
**B32B 7/06** (2019.01)

(52) Cooperative Patent Classification (CPC):
**B32B 7/06; B32B 27/00; C09K 3/10**

(86) International application number:
**PCT/JP2020/048506**

(87) International publication number:
**WO 2021/132487 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2019 JP 2019235157**

(71) Applicant: **Nitto Denko Corporation**
**Ibaraki-shi, Osaka 567-8680 (JP)**

(72) Inventor: **MORITA, Kosuke**
**Ibaraki-shi, Osaka 567-8680 (JP)**

(74) Representative: **Grünecker Patent- und**
**Rechtsanwälte**
**PartG mbB**
**Leopoldstraße 4**
**80802 München (DE)**

(54) **SEALANT SHEET WITH RELEASE LINER**

(57)    Provided is a sealant sheet that is handled as a laminate with a release liner and can be cured by photoirradiation through the release liner. The release-linered sealant sheet has a photo-curable sealant sheet, and a release liner placed on at least one face of the sealant sheet. The release liner has a light transmittance of 20 % or higher in the wavelength range from 350 nm to 450 nm.

[Fig. 1]

FIG.1

**Description**

[Technical Field]

The present invention relates to a release-linered sealant sheet.
This application claims priority to Japanese Patent Application No. 2019-235157 filed on December 25, 2019; and the entire content thereof is incorporated herein by reference.

[Background Art]

Sealant (or sealing agent) is widely used for various purposes. For instance, Patent Documents 1 and 2 teach curable liquid compositions used as sealant for aircrafts and aerospace. As materials for such aircraft sealant, liquid polysulfide polymers are known. Liquid polysulfide polymer includes -S-S- bonds in the molecule; and therefore, when allowed to cure, it can form a rubbery cured material having excellent resistance to oil such as jet fuel and hydraulic oil (oil resistance).

[Citation List]

[Patent Literature]

[Patent Document 1] Japanese Patent Application Publication No. 2006-526693
[Patent Document 2] Japanese Patent Application Publication No. 2008-530270

[Summary of Invention]

[Technical Problem]

With a liquid sealant such as those described in the cited documents, however, because it is in a liquid form, it is difficult to achieve a precise application of a desired thickness in a desired area of the target object. Thus, even for a skilled worker, there is a limit to reducing the time required for application of liquid sealant. There are also concerns about increased manufacturing costs, decreased productivity and degraded sealing quality, arising from difficulties in training and securing workers.
Accordingly, instead of liquid sealant as above, the present inventors have conducted research and development of a sealant sheet that is in sheet form prior to curing treatment. As a result, a photo-curable sealant sheet has been created and practical forms thereof have been further embodied to complete this invention. In other words, an objective of this invention is to provide a sealant sheet that is handled while laminated to a release liner and can be cured by photoirradiation through the release liner (hereinafter as through-liner photoirradiation). Other related objectives include providing a method comprising through-liner photoirradiation to a sealant sheet as well as providing a release-linered cured sealant.

[Solution to Problem]

This Description provides a sealant sheet having a release liner (or a release-linered sealant sheet). The release-linered sealant sheet has a photo-curable sealant sheet, and a release liner placed on at least one (first) face of the sealant sheet. The release liner has a light transmittance of 20 % or higher in the wavelength range from 350 nm to 450 nm.
According to this constitution, the sealant sheet can be handled in sheet form laminated to the release liner and can be cured by through-liner photoirradiation. In such a sealant sheet, the surface is protected with a release liner; and therefore, deformation by external forces and contamination such as dirt accumulation can be prevented. It can also be applied as a laminate with the release liner to a target object. Accordingly, in comparison to other forms of curable sealant such as liquid sealing formula, it shows superior handling properties and quality retention during transportation, processing and storage; and it can be placed easily and precisely in a desirable area, affording convenience for practical use.
In some preferable embodiments, the release liner has a light transmittance of 80 % or lower in the 350-450 nm wavelength range. The release liner having such a transmittance is readily visible because the transmittance in the visible light range is limited up to the prescribed value. This allows easy confirmation of whether or not the release liner is present on the sealant sheet. For instance, upon application of the sealant sheet to a target object, it facilitates removal of the release liner and can also prevent forgetting of release liner removal. Such a release-linered sealant sheet can be cured by through-liner photoirradiation without compromising the visibility of the release liner.

The sealant sheet preferably has a storage modulus of 0.005 MPa or greater and 0.8 MPa or less at 25 °C. With the sealant sheet having a storage modulus in this range, a suitable balance can be easily achieved between tightness of adhesion to the target object and retention stability of the sheet shape.

The sealant sheet is preferably formed of a polysulfide-based sealant. Having a polysulfide structure, the sealant sheet may exhibit excellent oil resistance.

The sealant sheet preferably comprises a photobase generator. The photobase generator-containing sealant is formulated so that photoirradiation can generate a base from the photobase generator to accelerate the curing reaction. Thus, it shows good storability when stored in an environment that inhibits base generation from the photobase generator. As the photobase generator, for instance, it is preferable to use a compound comprising a biguanidic cation (ionic biguanidic photobase generator). Such a photobase generator can favorably bring about a sealant sheet that combines well-balanced good pre-use storability and good curing properties (anionic photo-curing properties) when in use.

In some preferable embodiments, the sealant sheet may comprise an epoxy group-containing polysulfide polymer (AB) having two or more epoxy groups per molecule and a thiol compound (C) having two or more thiol groups per molecule. The sealant sheet may further comprise a photobase generator (D). Hereinafter, a sealant sheet in this embodiment may be referred to as a type (I) sealant sheet.

In other embodiments, the sealant sheet disclosed herein may comprise a thiol group-containing polysulfide polymer (AC) having two or more thiol groups per molecule and an epoxy compound (B) having two or more epoxy groups per molecule. The sealant sheet may further comprise a photobase generator (D). Hereinafter, a sealant sheet in this embodiment may be referred to as a type (II) sealant sheet.

By the anionic addition reaction between the epoxy group and the thiol group, sealant sheets of both type (I) and type (II) can be cured to increase the strength (e.g., strength at break) while placed in desired areas. The cured sealant thus formed may show excellent oil resistance due to the polysulfide structure. Because the thickness of the cured material can be controlled with the thickness of the sealant sheet being used, its application does not require adjustment of coating thickness as in application of a liquid sealant. Thus, according to the sealant sheet, a polysulfide-based sealant can be easily applied with precision.

This Description also provides a release-linered cured sealant. The release-linered cured sealant has a cured sealant in sheet form and a release liner placed on one face of the cured sealant. The release liner has a light transmittance of 20 % or higher in the wavelength range from 350 nm to 450 nm. The cured sealant may be formed by photoirradiation through the release liner; and therefore, it can be on a sealed object while having the release liner laminated thereon.

A release-linered cured sealant as described above may have a layered structure in which a release liner, a cured sealant in sheet form and a target object or part are layered in this order. In particular, such a layered structure may have the release liner on one (first) face of the cured sealant. The other (second) face of the cured sealant may be in tight contact with a target object or part.

In some preferable embodiments, the cured material can be formed of a polysulfide-based sealant. The cured material may include a disulfide structure and a structure derived from the anionic addition reaction of epoxy and thiol groups. The cured material may further include a biguanidic compound derived from a photobase generator. Such a cured sealant can be formed by using the base (biguanidic compound, here) formed from the photobase generator to accelerate the anionic addition reaction of epoxy and thiol groups.

In some preferable embodiments, the release liner has a light transmittance of 80 % or lower in the 350-450 nm wavelength range. The release liner having such a transmittance is readily visible because the transmittance in the visible light range is limited up to the prescribed value. This allows easy confirmation of whether or not the release liner is present on the cured sealant, preventing forgetting of release liner removal.

This Description also provides a method comprising a step of obtaining a release-linered sealant sheet having a photo-curable sealant sheet and a release liner placed on at least one face of the sealant sheet; and a step of subjecting the sealant sheet to through-liner photoirradiation. The release liner used in this method has a light transmittance of 20 % or higher in the 350-450 nm wavelength range. According to such an embodiment, the sealant sheet can be subjected as a laminate with the release liner to through-liner photoirradiation for curing, thereby showing excellent handling properties and quality retention.

The method may further comprise a step of removing the release liner (of the release-linered sealant sheet) from the sealant. The release liner has a light transmittance of 20 % to 80 % in the 350-450 nm wavelength range. In the presence of the release liner, the release-linered sealant sheet disclosed herein can be protected from deformation by external forces and contamination such as dirt accumulation. By using the release liner with transmittance up to 80 % in the 350-450 nm wavelength range, for release liner removal, the presence of the release liner on the sealant sheet can be easily confirmed, facilitating removal of the release liner and preventing forgetting of release liner removal.

The method typically comprises a step of applying the second face of the sealant sheet to a target object while the release liner is placed on the first face of the sealant sheet. Such a sealant sheet can be easily and precisely applied in sheet form laminated with the release liner to the target object. The method according to this embodiment may further comprise a step of removing the release liner of the release-linered sealant sheet on the target object from the sealant sheet.

In one aspect, the art disclosed herein includes a highly flexible setting of curing rates of the sealant sheet after curing treatment. For instance, the curing rate can be intentionally prolonged (prolonged-curing properties). Thus, the curing rate of the sealant sheet after curing treatment can be suitably selected; and through-liner photoirradiation can be carried out to allow the sealant sheet to undergo curing in suitable timing in accordance with the curing rate. The timing of the photoirradiation can be before or after the sealant sheet is applied to the target object. The photo-irradiation before and after application to target objects further includes an embodiment where the photoirradiation is carried out while the sealant sheet is being applied.

Based on the above, this Description provides a sealing method using an aforementioned release-linered sealant sheet. The sealing method comprises a step of obtaining a release-linered sealant sheet having a photo-curable sealant sheet and a release liner placed on at least one face of the sealant sheet; and a step of subjecting the sealant sheet to through-liner photoirradiation. The method also comprises a step of applying an exposed face of the sealant sheet to a target object before, after or during the photoirradiation, wherein the sealant sheet is applied to the target object while the release liner is placed on one face of the sealant sheet or after the release liner is removed from the sealant sheet; and after the photoirradiation, a step of removing the release liner (placed on the one face of the sealant sheet) from the sealant sheet. The release liner has a light transmittance of 20 % or higher (preferably 20 % to 80 %) in the 350-450 nm wavelength range.

The scope of the invention for which the present patent application seeks patent protection may include a suitable combination of the features described above and parts separated from the features.

[Brief Description of Drawings]

Fig. 1 shows a cross-sectional diagram schematically illustrating a constitutional example of the release-linered sealant sheet.

Fig. 2 shows a cross-sectional diagram schematically illustrating another constitutional example of the release-linered sealant sheet.

[Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent accurate sizes or reduction scales of the product actually provided.

<Constitutional examples of release-linered sealant sheet>

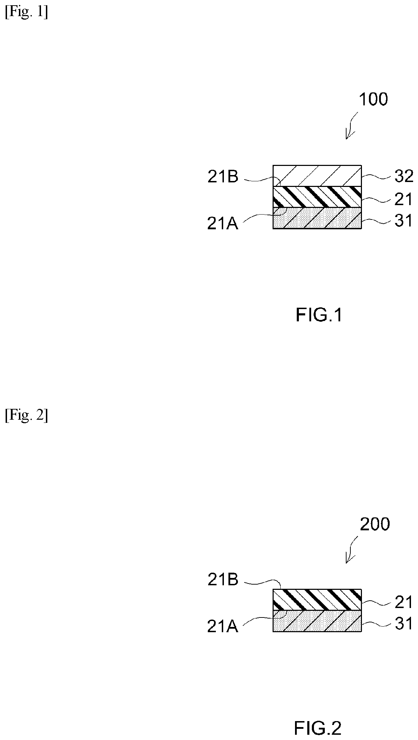

Figs. 1 and 2 show constitutional examples of the release-linered sealant sheet disclosed herein. Release-linered sealant sheet 100 shown in Fig. 1 has a photo-curable sealant sheet 21, release liners 31 and 32 placed on two faces of sealant sheet 21. More specifically, in sealant sheet 21 shown in Fig. 1, one face (first face) 21A and the other face (second face) 21B thereof are protected, respectively, with release liners 31 and 32 each having a release face at least on the sealant sheet 21 side. In this embodiment, each of release liners 31 and 32 has a light transmittance of 20 % or higher in the 350-450 nm wavelength range, with the light transmittance of release liner 31 being 80 % or lower. Two release liners 31 and 32 are in contact with the respective faces of sealant sheet 21 and are removable from sealant sheet 21. Release liners 31 and 32 can be removed from sealant sheet 21 with light peel force when appropriate such as when applied to a target object.

According to this constitution, sealant sheet 21 can be cured by through-liner photoirradiation while it is layered on at least release liner 31 or 32. For instance, after release liner 32 is removed to expose the second face 21B of sealant sheet 21 and the second face 21B is applied to a target object, even when left for a certain period of time, release liner 31 placed on sealant sheet 21 is readily noticed; and therefore, without forgetting of its removal, it can be removed from the first face 21A of sealant sheet 21 when appropriate.

Release-linered sealant sheet 200 shown in Fig. 2 has a sealant sheet 21 and a release liner 31 placed on the first face 21A thereof. More specifically, sealant sheet 21 has a constitution where one face 21A thereof is protected with release liner 31 having a release face on each side so that, when it is wound, the other face 21B of sealant sheet 21 is brought in contact with and protected also with release liner 31. Release liner 31 in this embodiment has a light transmittance in the range between 20 % and 80 % in the 350-450 nm wavelength range. Release liner 31 is in contact with face 21A of sealant sheet 21 and is removable from sealant sheet 21. Release liner 31 can be removed from sealant sheet 21 with light peel force when appropriate.

In release-linered sealant sheet 100 shown in Fig. 1, release liners 31 and 32 have different light transmittance values; however, the art disclosed herein is not limited to this. For instance, when both release liners have light transmittance values of 20 % or higher, their light transmittance values can be the same. As for the two release liners layered on the respective faces of the sealant sheet, both may have light transmittance values in the 20-80 % range; or the release liner opposite to the photoirradiation side may have a light transmittance below 20 %.

In the constitution shown in Fig. 2, release liner 31 has a light transmittance in the 20-80 % range, but is not limited to this. The light transmittance of release liner 31 can be above 80 %.

Release-linered sealant sheets 100 and 200 in the respective constitutional examples have substrate-free sealant sheets. However, as far as their photo-curing properties are not impaired, they may have support substrates formed from the materials described later.

<Sealant sheet>

The sealant sheet disclosed herein is pre-formed in a sheet shape and can be placed in an area to be sealed with it in the sheet form. In this aspect, the sealant sheet is clearly distinct from a liquid sealant (e.g., a liquid sealant prepared by mixing liquid A containing a liquid polysulfide polymer and liquid B containing a curing agent for the polysulfide polymer immediately before application) applied in liquid form to an area to be sealed.

The sealant sheet disclosed herein can be cured by photoirradiation. In other words, the sealant sheet disclosed herein is a photo-curable sealant sheet which undergoes curing by photoirradiation. Here, the term "photo-curable" means capable of being cured by photoirradiation. Accordingly, the photo-curable sealant sheet refers to a state before fully cured. In terms of having such curing properties, the sealant sheet disclosed herein is clearly distinct from the sealant after cured (cured sealant). The sealant sheet disclosed herein can be thought as a semi-cured sealant sheet which can be further cured after placed in an area to be sealed.

The sealant sheet disclosed herein preferably has shape-holding properties that enable stable retention of the sheet shape at room temperature (e.g., about 25 °C). The shape-holding properties can also be thought as resistance to plastic deformation such as creep deformation. The sealant sheet can have a storage modulus at 25 °C (or simply a "storage modulus" hereinafter) of, for instance, greater than 0.005 MPa, or preferably greater than 0.01 MPa. With increasing storage modulus of the sealant sheet, the handling properties and ease of processing (e.g., ease of cutting, anti-blocking properties, reworkability) of the sealant sheet tend to increase. In some embodiments, the storage modulus of the sealant sheet is suitably 0.02 MPa or greater, for instance, possibly 0.05 MPa or greater, 0.1 MPa or greater, or even 0.2 MPa or greater. The maximum storage modulus is not particularly limited. In some embodiments, the storage modulus of the sealant sheet can be, for instance, 2 MPa or less, 1 MPa or less, 0.8 MPa or less, 0.6 MPa or less, 0.5 MPa or less, 0.4 MPa or less, 0.3 MPa or less, or even 0.2 MPa or less. With decreasing storage modulus of the sealant sheet, the conformability to surface contours in areas to be sealed tends to increase.

The storage modulus is determined at a frequency of 1 Hz at 0.5 % strain, using a rheometer. As the rheometer, model name ARES G2 available from TA Instruments Japan, Inc. or a comparable system can be used. More specifically, the storage modulus is determined by the method described later in Examples.

As used herein, the storage modulus of the sealant sheet means the storage modulus of the uncured sealant sheet unless otherwise noted and is distinguished from the storage modulus of the cured sealant sheet (cured sealant). As used herein, the storage modulus of the sealant sheet typically means the storage modulus of the sealant sheet prior to use, that is, prior to placement by adhesion, etc., in the area to be sealed.

The sealant sheet disclosed herein may have a transmittance, for instance, above 5 %, above 10 %, above 15 %, or even above 20 %. The maximum transmittance is not particularly limited. The sealant sheet having at least a certain level of transmittance is likely to allow overall uniform and efficient curing. The maximum transmittance is not particularly limited. The transmittance of the sealant sheet disclosed herein can be 100 %. From the standpoint of the practicality, it can be 80 % or lower, 60 % or lower, or even 40 % or lower. The sealant sheet disclosed herein can be preferably made in an embodiment where the transmittance is 30 % or lower, 20 % or lower, or even 15 % or lower. The transmittance is determined by the method described below.

(Determination of transmittance)

Using a UV-vis spectrophotometer (UV-2550 available from Shimadzu Corporation), each 0.2 mm thick sealant sheets was subjected to spectroscopic analysis and the value at 365 nm wavelength was recorded as the transmittance of the sealant sheet.

The thickness of the sealant sheet is not particularly limited and can be selected in accordance with the thickness of the cured sealant to be obtained. From the standpoint of the sealing reliability, etc., in some embodiments, the sealant sheet may have a thickness of, for instance, 0.01 mm or greater, 0.03 mm or greater, 0.05 mm or greater, 0.1 mm or greater, or even 0.15 mm or greater. The sealant sheet disclosed herein can also be made in an embodiment where the thickness is, for instance, greater than 0.3 mm, greater than 0.5 mm, greater than 1 mm, or even greater than 1.5 mm. In some embodiments, the sealant sheet may have a thickness of, for instance, 10 mm or less, 5 mm or less, 3 mm or less, 2 mm or less, 1 mm or less, 0.5 mm or less, or even 0.3 mm or less. With decreasing thickness of the sealant sheet, the photo-curing properties tend to improve. It may be advantageous to reduce the thickness of the sealant sheet from the standpoint of the conformability to surface contours in the area to be sealed, weight reduction, etc.

The material of the sealant sheet disclosed herein is not particularly limited and various photo-curable materials can be used. Possible examples include silicone-based, modified silicone-based, silylated acrylic, acrylic, acrylic urethane-based, polyurethane-based, polysulfide-based, polyisobutylene-based, butyl rubber-based and like sealant materials. In particular, polysulfide-based sealant materials are preferable for their excellent oil resistance. The following description regards to polysulfide-based sealant materials as favorable examples, but is not to limit the sealant disclosed herein to polysulfide-based kinds.

<Polysulfide polymer (A)>

In some preferable embodiments, the sealant sheet comprises a polysulfide polymer (A). The polysulfide polymer (A) has a repeat unit that includes a disulfide structure represented by -S-S- and contributes to greater oil resistance of the cured material formed from the sealant sheet. The type (I) sealant sheet disclosed herein comprises the epoxy group-containing polysulfide polymer (AB) as the polysulfide polymer (A). The type (II) sealant sheet disclosed herein comprises the thiol group-containing polysulfide polymer (AC) as the polysulfide polymer (A).

One molecule of polysulfide polymer (A) may include one, two or more disulfides. From the standpoint of the oil resistance of the cured material, it is preferable to use a polysulfide polymer (A) having an average of three or more disulfide structures per molecule. The average number of disulfide structures per molecule of polysulfide polymer (A) (or the average disulfide group count, hereinafter) can be, for instance, 5 or greater, 10 or greater, 15 or greater, or even 20 or greater. The upper limit of the average disulfide group count is not particularly limited. From the standpoint of the ease of manufacturing the sealant sheet (e.g., the ease of molding into a sheet shape), etc., it can be, for instance, 100 or less, 70 or less, or even 50 or less.

The disulfide structure is preferably in the main chain of polysulfide polymer (A). When the main chain includes the disulfide structure, the resulting cured material tends to show good stretchiness.

In some embodiments, the polysulfide polymer (A) preferably includes a repeat unit represented by the next general formula (1):

$$-R^1-O-R^2-O-R^3-S-S- \qquad (1)$$

Here, $R^1$, $R^2$ and $R^3$ in the general formula (1) are independently an alkylene group with 1 to 4 carbon atoms, preferably an alkylene group with 1 to 3 carbon atoms, or more preferably an alkylene group with 1 or 2 carbon atoms. The repeat unit (1) has a structure in which an ether structure is connected to a disulfide structure. With a polysulfide polymer (A) having such a repeat unit (1), the resulting cured material tends to have excellent oil resistance and flexibility. The average number of repeat units (1) per molecule of polysulfide polymer (A) can be, for instance, 5 or greater, 10 or greater, 15 or greater, or 20 or greater. The average number can be, for instance, 100 or less, 70 or less, or even 50 or less. The polysulfide polymer (A) may have, per molecule, solely one region with successive repeat units (1), or two or more such regions.

In some embodiments, the polysulfide polymer (A) may include at least one among structures represented by the following general formulas (2a) and (2b):

$$-CH_2-S-CH_2CHOH-R' \qquad (2a)$$

$$-CH_2-S-CH(CH_2OH)-R' \qquad (2b)$$

Here, R' in the general formulas (2a) and (2b) is an organic group having at least one (e.g., about 1 to 5) epoxy group(s). The structures of the general formulas (2a) and (2b) can be formed, for instance, by addition reaction between a thiol having a structural moiety represented by $-CH_2-SH$ and an epoxy compound having a substituent group R' on the epoxy ring. The number of structural units represented by the general formula (2a) or (2b) (the total number when both a structure represented by the general formula (2a) and a structure represented by the general formula (2b) are included) can be, as the average number per molecule of polysulfide polymer (A), for instance, 1.1 or greater, 1.3 or greater, 1.5 or greater, 1.8 or greater, 2.0 or greater, or even greater than 2.0. The average number can be, for instance, 15 or less, 10 or less, 7.0 or less, or even 5.0 or less.

Structures represented by the general formulas (2a) and (2b) can be formed by the addition reaction of thiol groups and epoxy groups. The polysulfide polymer (A) containing a structure represented by the general formula (2a) or (2b) can be, for instance, a reaction product of a thiol group-containing polysulfide having a disulfide structure and a thiol group in one molecule, and an epoxy compound having two or more epoxy groups in one molecule; or a modified product thereof.

The weight average molecular weight (Mw) of the thiol group-containing polysulfide as a precursor of the polysulfide polymer (A) is not particularly limited. For instance, it can be 500 or higher, 800 or higher, 1000 or higher, above 1000, or even above 2000. A thiol group-containing polysulfide having a higher Mw tends to lead to formation of a sealant sheet that provides a cured material with greater stretchiness. In some embodiments, the Mw of the thiol group-containing polysulfide can be, for instance, above 2500, above 3000, or even above 3500. The Mw of the thiol group-containing polysulfide can be, for instance, 30000 or lower, or even 10000 or lower. From the standpoint of the ease of handling and reactivity with the epoxy compound, in some embodiments, the Mw of the thiol group-containing polysulfide can be, for instance, below 9000, below 8000, below 7500, below 7000, or even below 6500.

Here, the Mw of the thiol group-containing polysulfide, an epoxy group-containing polysulfide described later, polysulfide polymer (A) or the like can be determined based on polyethylene glycol by gel permeation chromatography (GPC), using tetrahydrofuran (THF) as the mobile phase. Alternatively, a nominal value given in a catalog, literature and the like can be used.

The thiol group-containing polysulfide preferably includes the disulfide structure in the main chain. According to a sealant sheet comprising a polysulfide polymer (A) that is a reaction product (or a modified product thereof) of a thiol group-containing polysulfide with a disulfide structure in the main chain and an epoxy compound having two or more epoxy groups per molecule, the resulting cured material tends to show good stretchiness. The number (as the average number) of disulfide structures in one molecule of the thiol group-containing polysulfide (or the average disulfide group count of the entire thiol group-containing polysulfide used) can be, for instance, 3 or greater, 5 or greater, 10 or greater, 15 or greater, or even 20 or greater. The upper limit of the average disulfide group count is not particularly limited. From the standpoint of the ease of manufacturing the sealant sheet (e.g., the ease of molding into a sheet shape), etc., it can be, for instance, 100 or less, 70 or less, or even 50 or less.

The thiol group-containing polysulfide as a precursor of the polysulfide polymer (A) may include one, two or more thiol groups per molecule of thiol group-containing polysulfide. From the standpoint of readily obtaining a sealant sheet suited for increasing the strength of the cured material and reducing the curing time, a preferable thiol group-containing polysulfide includes more than one thiol group in average per molecule. The average number of thiol groups per molecule of the thiol group-containing polysulfide used (or the average thiol group count) can be, for instance, 1.1 or greater, 1.3 or greater, 1.5 or greater, 1.8 or greater, 2 or greater, or even greater than 2. The upper limit of the average thiol group count is not particularly limited. From the standpoint of the flexibility of the cured material, it can be, for instance, 15 or less, 10 or less, 7 or less, or even 5 or less. A polysulfide having an average of two or more thiol groups can be thought as a thiol compound (C) having two or more thiol groups per molecule.

The thiol group is preferably placed at a terminus of the thiol group-containing polysulfide. By allowing such a thiol group-containing polysulfide to react with an epoxy compound having two or more epoxy groups per molecule, a polysulfide polymer having a terminal epoxy group can be favorably formed. The thiol group-containing polysulfide used may have a thiol group at one terminus of the main chain or at each terminus of the main chain; it may further have another thiol group elsewhere besides the termini of the main chain; or it can be a mixture of these. It is particularly preferable to use a thiol group-containing polysulfide having a thiol group at each terminus of the main chain, that is, a thiol-bi-terminated polysulfide. According to a sealant sheet comprising a polysulfide polymer (A) synthesized using a thiol-bi-terminated polysulfide, the resulting cured material tends to combine well-balanced strength and stretchiness. In some embodiments, of the entire thiol group-containing polysulfide used, the ratio of the thiol-bi-terminated polysulfide can be, by weight, for instance, above 50 %, above 70 %, above 90 %, above 95 %, above 98 %, or even essentially 100 %.

The thiol-bi-terminated polysulfide is preferably represented by the next general formula (3):

$$HS\text{-}(R^1\text{-}O\text{-}R^2\text{-}O\text{-}R^3\text{-}S\text{-}S)_n\text{-}R^1\text{-}O\text{-}R^2\text{-}O\text{-}R^3\text{-}SH \qquad (3)$$

$R^1$, $R^2$ and $R^3$ in the general formula (3) are independently an alkylene group with 1 to 4 carbon atoms, preferably an alkylene group with 1 to 3 carbon atoms, or more preferably an alkylene group with 1 or 2 carbon atoms. In the general formula (3), n can be an integer selected so that the compound of the general formula (3) has a formula weight in a range of, for instance, 500 or higher and 10000 or lower, 800 or higher and below 9000, 1000 or higher and below 8000, above 1000 and below 8000, or above 2000 and below 7500.

In some embodiments, as the compound represented by the general formula (3), it is preferable to use a thiol group-containing polysulfide wherein $R^1$ is $C_2H_4$, $R^2$ is $CH_2$, and $R^3$ is $C_2H_4$. In this embodiment, n in the general formula (3) can be, for instance, 3 to 70, 5 to 60, 7 to 50, or even 10 to 50.

(Epoxy group-containing polysulfide polymer (AB))

Among the sealant sheets disclosed herein, the type (I) sealant sheet may comprise, as the polysulfide polymer (A), an epoxy group-containing polysulfide polymer (AB) having two or more epoxy groups per molecule and may further comprise a thiol compound (C) having two or more thiol groups per molecule. In some preferable embodiments, the sealant sheet may further comprise a photobase generator (D). The sealant sheet in such an embodiment may further include or may be free of a polysulfide polymer (A) that is not an epoxy group-containing polysulfide polymer (AB). The sealant sheet in this embodiment may further include or may be free of an epoxy compound (B) that is not an epoxy group-containing polysulfide polymer (AB).

The average number of epoxy groups per molecule of epoxy group-containing polysulfide polymer (AB) (or the average epoxy group count, hereinafter) can be, for instance, about 2 or greater and 20 or less. From the standpoint of the flexibility of the cured material, the average epoxy group count can also be, for instance, 15 or less, 10 or less, 7 or less, or even 5 or less. In some embodiments, the average epoxy group count can be 4 or less, or even 3 or less. The average epoxy group count is typically 2 or greater. From the standpoint of the curing properties and the cured material's strength, it can also be above 2, or even 2.5 or greater. In some embodiments, the average epoxy group count can be, for instance, 3 or greater, or even 4 or greater.

The epoxy groups in the epoxy group-containing polysulfide polymer (AB) are preferably located at a terminus of the epoxy group-containing polysulfide polymer (AB). With such an epoxy group-containing polysulfide polymer (AB), the resulting cured material tends to be highly stretchable. The sealant sheet disclosed herein may include an epoxy group-containing polysulfide polymer (AB) that has two or more epoxy groups at one terminus of the main chain; it may include an epoxy group-containing polysulfide polymer (AB) that has one, two or more epoxy groups at each terminus of the main chain; or it may include both of these. The epoxy group-containing polysulfide polymer (AB) having an epoxy group at one terminus of the main chain may have a non-epoxy functional group at a terminus different from the terminus having the epoxy group. The non-epoxy functional group can be, for instance, a thiol group, amino group, hydroxy group, etc. The sealant sheet disclosed herein preferably includes at least an epoxy group-containing polysulfide polymer (AB) having an epoxy group at each terminus of the main chain. With the inclusion of an epoxy group-containing polysulfide polymer (AB) having such a structure, the resulting cured material tends to combine well-balanced strength and stretchiness. For instance, it is preferable to use an epoxy group-containing polysulfide polymer (AB) having one epoxy group at each terminus of the main chain.

The epoxy group-containing polysulfide polymer (AB) can be obtained by allowing a thiol group-containing polysulfide as those described above to react with an epoxy compound having two or more epoxy groups per molecule, with epoxy groups in excess. The epoxy compound can be a bifunctional epoxy compound having two epoxy groups per molecule or a polyfunctional epoxy compound having three or more epoxy groups per molecule. As the epoxy compound, solely one species or a combination of two or more species can be used. From the standpoint of the ease of handling at the reaction with the thiol group-containing polysulfide, etc., in some embodiments, it is preferable to use an epoxy compound that exists as liquid at room temperature.

Examples of the bifunctional epoxy compound include, but are not limited to, bisphenol A epoxy resins, bisphenol F epoxy resins, hydrogenated bisphenol A epoxy resins (i.e. epoxy compounds corresponding to that in structure resulting from hydrogenation of bisphenol A epoxy resins to convert aromatic rings to cycloalkyl rings), hydrogenated F epoxy resins, biphenyl epoxy resins, aliphatic epoxy resins (e.g., polypropylene glycol-based epoxy resins, etc.), 1,6-hexanediol diglycidyl ether, and polyethylene glycol diglycidyl ether.

Examples of the polyfunctional epoxy compound include, but are not limited to, novolac-based epoxy resins, glycidyl amine-based epoxy resins, biphenyl-based epoxy resins, triphenylmethane-based epoxy resins, dicyclopentadiene-based epoxy resins, glycerin-based epoxy resins, trimethylol propane-based epoxy resins, N,N,N',N'-tetraglycidyl-m-xylenediamine, 1,3-bis(N,N-diglycidylaminomethyl)cyclohexane, and polyglycerol polyglycidyl ether. The number of epoxy groups in one molecule of the polyfunctional epoxy compound is at least 3 or greater, can be 4 or greater, or even 5 or greater. The number of epoxy groups in one molecule of the polyfunctional epoxy compound is usually suitably 10 or less, possibly 8 or less, or even 6 or less.

In some embodiments, as the epoxy compound, a bifunctional epoxy compound can be preferably used. The use of the bifunctional epoxy compound can be advantageous in obtaining a sealant sheet that gives a cured material showing suitable stretchiness. As the bifunctional epoxy compound, solely one species or a combination of two or more species can be used.

In some embodiments, as the bifunctional epoxy compound, it is preferable to use an epoxy compound having a five-membered or larger carbon ring structure in the molecule. With a sealant sheet formed using a bifunctional epoxy compound having such a structure, the resulting cured material tends to show high strength and good stretchiness. The five-membered or larger carbon ring structure can be, for instance, a benzene ring, naphthalene ring, cyclohexyl ring, etc. Examples of the epoxy compound including such a carbon ring structure include bisphenol A epoxy resins, bisphenol F epoxy resins, hydrogenated bisphenol A epoxy resins, hydrogenated bisphenol F epoxy resins, and biphenyl epoxy resins. In some preferable embodiments, as the bifunctional epoxy compound, a bisphenol F epoxy resin can be used.

As the epoxy compound, one, two or more species of polyfunctional epoxy compound can be used in combination with a bifunctional epoxy compound or in place of the bifunctional epoxy resin. The use of a polyfunctional epoxy resin may increase the strength of the cured material. The combined use of a bifunctional epoxy compound and a polyfunctional epoxy compound can bring about a sealant sheet that provides a cured material that combines strength and stretchiness at a high level.

In some embodiments, as the polyfunctional epoxy compound, it is possible to use a polyfunctional epoxy compound having an epoxy group-containing repeat unit (i.e. a polyfunctional epoxy polymer) and it is preferable to use, for instance, a novolac-based epoxy resin. Examples of the novolac-based epoxy resin include phenol novolac-based epoxy resins and o-cresol novolac-based epoxy resins. The use of a novolac-based epoxy resin may be advantageous in obtaining a sealant sheet that gives a cured material with high strength and good stretchiness. With the use of a novolac-based epoxy resin having a lower molecular weight, the stretchiness of the cured material tends to increase. For instance, it is preferable to use a phenol novolac-based epoxy resin that exists as liquid at room temperature.

When carrying out the reaction between the thiol group-containing polysulfide and the epoxy compound having two or more epoxy groups in one molecule, any of a suitable catalyst can be used as long as the effect obtainable by the art disclosed herein is not greatly impaired. For instance, a known base catalyst can be suitably selected and used, such as 2,4,6-triaminomethylphenol, triethylamine, and 1,8-diazabicyclo[5.4.0]undeca-7-ene.

When using a basic catalyst, its amount used is not particularly limited and can be selected to suitably obtain the catalytic activity. In some embodiments, relative to 100 parts by weight of the total amount of the thiol group-containing polysulfide and the epoxy compound having two or more epoxy groups per molecule, the amount of basic catalyst used can be, for instance, 1 part by weight or less; it is usually typically 0.5 part by weight or less, possibly 0.2 part by weight or less, 0.1 part by weight or less, or even 0.08 part by weight or less. From the standpoint of enhancing the storage properties of the sealant sheet, it is advantageous to not use the basic catalyst in large excess. From such a standpoint, the amount of basic catalyst used to 100 parts by weight of the total amount can be, for instance, 0.07 part by weight or less, 0.05 part by weight or less, 0.03 part by weight or less, or even 0.02 part by weight or less. The minimum amount of basic catalyst used to 100 parts by weight of the total amount is not particularly limited and it can be, for instance, 0.001 part by weight or greater, or even 0.005 part by weight or greater.

The reaction can proceed by mixing a thiol group-containing polysulfide and an epoxy compound having two or more epoxy groups in one molecule as well as a catalyst used as necessary in a suitable reaction vessel. In some preferable embodiments, a thiol group-containing polysulfide, a bifunctional epoxy compound, a polyfunctional epoxy compound and a catalyst (e.g., a basic catalyst) are mixed in a suitable reaction vessel. There are no particular limitations to the method for supplying the respective materials to the reaction vessel or the order of mixing them, and they can be selected to form a suitable reaction product. The reaction conditions can be suitably selected as long as the effect obtainable by the art disclosed herein is not greatly impaired. In some embodiments, the reaction can be carried out at a reaction temperature of, for instance, 0 °C to 120 °C, preferably 5 °C to 120 °C, or more preferably 10 °C to 120 °C. In view of the ease of controlling the reaction and the reaction efficiency, in some embodiments, the reaction temperature can be, for instance, 20 °C to 100 °C, 30 °C to 100 °C, 40 °C to 100 °C, or even 60 °C to 100 °C. The reaction time is not particularly limited and can be selected, for instance, in a range of 10 minutes to 720 hours (preferably 1 hour to 240 hours).

In some embodiments, the reaction is allowed to proceed by carrying out, in the following order, a first heating step performed at a temperature of, for instance, 60 °C to 120 °C (preferably 70 °C to 110 °C); and a second heating step performed at a temperature of 40 °C to 80 °C (preferably 50 °C to 70 °C). By carrying out the heating process in such a stepwise manner, it is possible to inhibit the polysulfide product from obtaining an excessively high elastic modulus and efficiently carry out the step of mixing (e.g., kneading) the reaction product and additives such as filler. The second heating step is preferably performed at a temperature lower than that of the first heating step. The heating time in the first heating step is, for instance, possibly 10 minutes or longer, usually suitably 30 minutes or longer, or also possibly 1 hour or longer. In some preferable embodiments, the heating time in the first heating step can be selected, for instance, from the range of 10 minutes to 24 hours (preferably 30 minutes to 12 hours, more preferably 1 hour to 6 hours). The heating time in the second heating step is, for instance, possibly 3 hours or longer, usually suitably 6 hours or longer, or also possibly 24 hours or longer. In some preferable embodiments, the heating time in the second heating step can be selected, for instance, from the range of 3 hours to 720 hours (preferably 48 hours to 500 hours, more preferably 72 hours to 300 hours). The heating time of the second heating step is preferably longer than that of the first heating step. It is noted that the heating process can be carried out stepwise, divided into three or more steps.

In the synthesis of epoxy group-containing polysulfide polymer (AB) by the reaction described above, the ratio between the thiol group-containing polysulfide and the epoxy compound used can be selected so that the ratio of the total number of epoxy groups in the epoxy compound to the total number of thiol groups in the thiol group-containing polysulfide, i.e., the equivalent ratio of epoxy groups/ thiol groups (or the epoxy/thiol ratio, hereinafter), has a value above 1. In some embodiments, the epoxy/thiol ratio value can be, for instance, 1.05 or greater, or even 1.1 or greater. From the standpoint of increasing the strength of the cured material, etc., in some embodiments, the epoxy/thiol ratio value can be, for instance, above 1.2, above 1.4, above 1.5, or even above 1.7. The epoxy/thiol ratio value can be, for instance, below 7.0, below 5.0, below 4.5, or even below 4.0. In some embodiments, from the standpoint of enhancing the stretchiness of the cured material, etc., the epoxy/thiol ratio value can be, for instance, below 3.5, below 3.2, below 3.0, below 2.5, below 2.0, or even below 1.8.

In the synthesis of the epoxy group-containing polysulfide polymer (AB) by the reaction described above, there are no particular limitations to the amount of the epoxy compound having two or more epoxy groups per molecule used. For instance, the epoxy compound can be used in an amount to obtain an aforementioned epoxy/thiol ratio value. In some embodiments, the amount of the epoxy compound used to 100 parts by weight of the thiol group-containing polysulfide is, for instance, possibly 1 part by weight or greater, usually suitably 3 parts by weight or greater, also possibly 5 parts by weight or greater, or even 7 parts by weight or greater. The amount of the epoxy compound used to 100 parts by weight of the thiol group-containing polysulfide is, for instance, possibly 50 parts by weight or less, usually suitably 30 parts by weight or less, also possibly 20 parts by weight or less, or even 15 parts by weight or less.

(Thiol group-containing polysulfide polymer (AC))

Among the sealant sheets disclosed herein, the type (II) sealant sheet may comprise, as the polysulfide polymer (A), a thiol group-containing polysulfide polymer (AC) having two or more thiol groups per molecule and may further comprise an epoxy compound (B) having two or more epoxy groups per molecule. In some preferable embodiments, the sealant sheet may further comprise a photobase generator (D). The sealant sheet in such an embodiment may further include or may be free of a polysulfide polymer (A) that is not a thiol group-containing polysulfide polymer (AC). The sealant sheet in this embodiment may further include or may be free of a thiol compound (C) that is not a thiol group-containing polysulfide polymer (AC).

The average thiol group count in the thiol group-containing polysulfide polymer (AC) is typically 2 or greater, or even greater than 2. The upper limit of the average thiol group count is not particularly limited. From the standpoint of the flexibility of the cured material, it is usually suitably 10 or less, possibly 7 or less, 5 or less, 4 or less, 3 or less, 2.8 or less, or even 2.4 or less.

The thiol groups in the thiol group-containing polysulfide polymer (AC) are preferably placed at a terminus of the thiol group-containing polysulfide polymer (AC). With such a thiol group-containing polysulfide polymer (AC), the resulting cured material tends to be highly stretchable. A preferable thiol group-containing polysulfide polymer (AC) has one, two or more thiol groups at each terminus of the main chain. A more preferable thiol group-containing polysulfide polymer (AC) has one thiol group at each terminus of the main chain. With the inclusion of a thiol group-containing polysulfide polymer (AC) having such a structure, the resulting cured material tends to combine well-balanced strength and stretchiness.

As the thiol group-containing polysulfide polymer (AC), it is possible to use, for instance, a species obtainable by allowing an aforementioned epoxy group-containing polysulfide polymer (AB) to react with a thiol compound having two or more thiol groups per molecule, with thiol groups in excess. The thiol compound can be a bifunctional thiol compound having two thiol groups per molecule or a polyfunctional thiol compound having three or more thiol groups per molecule. As the thiol compound, solely one species or a combination of two or more species can be used. From the standpoint of obtaining a sealant sheet that provides a favorably stretchable cured material, a bifunctional thiol compound can be preferably used. For instance, of the thiol compound allowed to react with the epoxy groups in the epoxy group-containing polysulfide polymer (AB), the bifunctional thiol compound can account for 50 % by weight or more, 70 % by weight or more, or 90 % by weight or more. A bifunctional thiol compound can be used solely as the thiol compound.

As the thiol compound allowed to react with the epoxy group-containing polysulfide polymer (AB), for instance, it is possible to use one, two or more species selected among the usable materials for the thiol compound (C) described later. The reaction between the epoxy group-containing polysulfide polymer (AB) and the thiol compound can be allowed to proceed in the same manner as for the reaction between a thiol group-containing polysulfide and an epoxy compound described earlier.

In the synthesis of thiol group-containing polysulfide polymer (AC) by the reaction described above, the ratio between the epoxy group-containing polysulfide and the thiol compound used can be selected so that the ratio of the total number of thiol groups in the thiol compound to the total number of epoxy groups in the epoxy group-containing polysulfide, i.e., the epoxy/thiol ratio, has a value below 1. From the standpoint of increasing the strength of the cured material, etc., in some embodiments, the epoxy/thiol ratio value can be, for instance, 0.95 or less, 0.9 or less, or even 0.85 or less. The epoxy/thiol ratio value is, for instance, possibly 0.1 or greater, or usually suitably 0.2 or greater. In some embodiments, from the standpoint of enhancing the stretchiness of the cured material, etc., the epoxy/thiol ratio value can be, for instance, 0.3 or greater, 0.5 or greater, 0.6 or greater, or even 0.7 or greater.

In the synthesis of the thiol group-containing polysulfide polymer (AC) by the reaction described above, there are no particular limitations to the amount of the thiol compound having two or more thiol groups per molecule used. For instance, the thiol compound can be used in an amount to obtain an aforementioned epoxy/thiol ratio value. In some embodiments, the amount of the thiol compound used to 100 parts by weight of the epoxy group-containing polysulfide is, for instance, possibly 1 part by weight or greater, usually suitably 3 parts by weight or greater, also possibly 5 parts by weight or greater, or even 7 parts by weight or greater. The amount of the thiol compound used to 100 parts by weight of the epoxy group-containing polysulfide is, for instance, possibly 50 parts by weight or less, usually suitably 30 parts by weight or less, also possibly 20 parts by weight or less, or even 15 parts by weight or less.

As the thiol group-containing polysulfide polymer (AC) in the type (II) sealant sheet, for instance, it is also possible to use a thiol group-containing polysulfide (preferably a thiol-bi-terminated polysulfide) described earlier as the material that can be used as a precursor of polysulfide polymer (A).

<Epoxy compound (B)>

In some embodiments, the sealant sheet comprises an epoxy compound (B). As the epoxy compound (B) in the sealant sheet disclosed herein, a compound having two or more epoxy groups per molecule can be used without particular limitations. For instance, one, two or more species can be used, selected from the group consisting of the various bifunctional epoxy compounds and polyfunctional epoxy compounds exemplified as the materials that can be used for preparing the epoxy group-containing polysulfide polymer (AB).

In view of the balance between the sealant sheet's storability prior to use and curing properties upon use, it is preferable to use an epoxy compound (B) having an epoxy equivalence in the range of 50 g/eq or higher and 600 g/eq or lower. The epoxy equivalence can be, for instance, 100 g/eq or higher, 120 g/eq or higher, 150 g/eq or higher; and it can be, for instance, 400 g/eq or lower, 300 g/eq or lower, or even 200 g/eq or lower. With increasing epoxy equivalence, the storability prior to use improves while the curing properties upon use tend to degrade. When using two or more species of epoxy compounds (B), the sum of the products of the epoxy equivalences and the weight fractions of the respective epoxy compounds (B) is preferably in these ranges. It is noted that the epoxy equivalence refers to the gram count per equivalence (equivalent weight) of the epoxy group-containing compounds and can be determined based on JIS K7236:2001. Alternatively, nominal values given in a catalog, literature, etc., can be used as well.

The average epoxy group count of the epoxy compound (B) can be, for instance, about 2 or greater and 10 or less. From the standpoint of the flexibility of the cured material, the average epoxy group count can be, for instance, 7 or less, 5 or less, 4 or less, or even below 4. In some embodiments, the average epoxy group count can be 3 or less, 2.5 or less, or even 2.2 or less. As the epoxy compound (B), one, two or more species of bifunctional epoxy compounds can be used solely. According to such an embodiment, the resulting sealant sheet is likely to provide a favorably stretchable cured material.

<Thiol compound (C)>

In some embodiments, the sealant sheet comprises a thiol compound (C). As the thiol compound (C) in the sealant sheet disclosed herein, a compound having two or more thiol groups per molecule can be used without particular limitations. Examples include, but are not limited to, trimethylolpropane tris(thiopropionate) (or trimethylolpropane tris(3-mercaptopropionate)), pentaerythritol tetrakis(thiopropionate), ethylene glycol bisthioglycolate, 1,4-butanediol bisthioglycolate, trimethylolpropane tris(thioglycolate), pentaerythritol tetrakis(thioglycolate), di(2-mercaptoethyl) ether, 1,4-butanedithiol, 1,5-dimercapto-3-thiapentane, 1,8-dimercapto-3,6-dioxaoctane, 1,3,5-trimercaptomethylbenzene, 4,4'-thiodibenzenethiol, 1,3,5-trimercaptomethyl-2,4,6-trimethylbenzene, 2,4,6-trimercapto-s-triazine, 2-dibutylamino-4,6-dimercapto-s-triazine, pentaerythritol tetrakis(3-mercaptopropionate) and dipentaerythritol hexakis(3-mercaptopropionate).

Examples of commercial thiol compounds (C) include, but are not limited to, JER MATE QX11, QX12, JER CURE QX30, QX40, QX60, QX900, and CAPCURE CP3-800 available from Mitsubishi Chemical Corporation; OTG, EGTG, TMTG, PETG, 3-MPA, TMTP and PETP available from Yodo Kagaku Co., Ltd.; TEMPIC, TMMP, PEMP, PEMP-II-20P and DPMP available from Sakai Chemical Industry Co., Ltd.; and Karenz MT PE1, Karenz MT BD1, Karenz MT NR1, TPMB and TEMB available from Showa Denko K. K. Among these compounds, each can be used alone or a mixture of two or more species can be used as well.

The average thiol group count of the thiol compound (C) can be, for instance, about 2 or greater and 10 or less. From the standpoint of the flexibility of the cured material, the average thiol group count can be, for instance, 7 or less, 5 or less, 4 or less, or even below 4. In some embodiments, the average thiol group count can be 3 or less, 2.5 or less, or even 2.2 or less. As the thiol compound (C), one, two or more species of bifunctional thiol compounds can be used solely. According to such an embodiment, the resulting sealant sheet is likely to provide a favorably stretchable cured material.

As the thiol compound (C), it is possible to use a compound having a primary thiol group (or a primary thiol compound), a compound having a secondary thiol group (a secondary thiol compound), or a compound having a tertiary thiol group (a tertiary thiol compound). From the standpoint of the curing properties when the sealant sheet is used, a primary thiol compound can be preferably used. From the standpoint of the curing rate control and storability of the sealant sheet prior to use, a secondary or higher thiol compound (i.e. a secondary thiol compound and/or a tertiary thiol compound) can be preferably used. It is noted that hereinafter, a thiol compound having two primary thiol groups per molecule may be referred to as a primary bifunctional thiol compound and a thiol compound having two secondary thiol groups per molecule may be referred to as a secondary bifunctional thiol compound.

In some embodiments, as the thiol compound (C), a primary thiol compound and a secondary or higher thiol compound (e.g., a secondary thiol compound) can be used together. According to such an embodiment, it is possible to favorably combine storability of the sealant sheet prior to use and curing properties upon its use. The weight ratio of the primary thiol compound in the total weight of the primary and secondary or higher thiol compounds is not particularly limited. It is, for instance, possibly 5 % by weight or higher, preferably 15 % by weight or higher, more preferably 25 % by weight or higher, or also possibly 35 % by weight or higher; and it is, for instance, possibly 95 % by weight or lower, preferably 75 % by weight or lower, also possibly 60 % by weight or lower, or even 45 % by weight or lower.

As the thiol compound (C), in view of the balance between the sealant sheet's storability prior to use and curing properties upon use, it is preferable to use a species having a thiol equivalence in the range of 45 g/eq or higher and 450 g/eq or lower. The thiol equivalence can be, for instance, 60 g/eq or higher, 70 g/eq or higher, 80 g/eq or higher; and it can be, for instance, 350 g/eq or lower, 250 g/eq or lower, 200 g/eq or lower, or even 150 g/eq or lower. With increasing thiol equivalence, the storability prior to use improves while the curing properties upon use tend to degrade. When using two or more species of thiol compounds (C), the sum of the products of the thiol equivalences and the weight fractions of the respective thiol compounds (C) is preferably in these ranges. It is noted that the thiol equivalence refers to the gram count per equivalence (equivalent weight) of the thiol group-containing compounds and can be determined by iodometry. Alternatively, nominal values given in a catalog, literature, etc., can be used as well.

In either the type (I) or type (II) sealant sheet disclosed herein, there are no particular limitations to the ratio of the epoxy group equivalence to the thiol group equivalence possibly in the sealant sheet, that is, the epoxy/thiol ratio of the sealant sheet. The sealant sheet's epoxy/thiol ratio value can be, for instance, about 0.1 or greater and 10 or less, 0.2 or greater and 5 or less, 0.3 or greater and 3 or less, or even 0.5 or greater and 2 or less. When the epoxy/thiol ratio is at or above an aforementioned lower limit and at or below an aforementioned upper limit, the resulting cured material tends to combine well-balanced strength and stretchiness. In some embodiments, the epoxy/thiol ratio can be, for instance, 0.6 or greater, 0.7 or greater, or 0.8 or greater; and 1.7 or less, 1.5 or less, or 1.2 or less.

In the type (I) sealant sheet, the amount of the thiol compound (C) possibly in the sealant sheet is not particularly limited. The amount of the thiol compound (C) in the sealant sheet can be selected, for instance, to obtain an aforementioned epoxy/thiol ratio. In some embodiments, the amount of the thiol compound (C) relative to 100 parts by weight of the epoxy group-containing polysulfide polymer (AB) can be, for instance, 0.05 part by weight or greater, 0.1 part by weight or greater, 0.3 part by weight or greater, or even 0.5 part by weight or greater; and it can be, for instance, 10 parts by weight or less, 5 parts by weight or less, 3 parts by weight or less, or even 1 part by weight or less.

In the type (II) sealant sheet, the amount of the epoxy compound (B) possibly in the sealant sheet is not particularly limited. The amount of the epoxy compound (B) in the sealant sheet can be selected, for instance, to obtain an aforementioned epoxy/thiol ratio. In some embodiments, the amount of the epoxy compound (B) relative to 100 parts by weight of the thiol group-containing polysulfide polymer (AC) can be, for instance, 0.05 part by weight or greater, 0.1 part by weight or greater, 0.3 part by weight or greater, 0.5 part by weight or greater, or even 1 part by weight or greater; and it can be, for instance, 15 parts by weight or less, 10 parts by weight or less, or even 5 parts by weight or less.

<Photo-reaction catalyst>

The photo-curable sealant sheet disclosed herein preferably comprises one, two or more species among various photo-reaction catalysts capable of helping initiate or accelerate the photo-reaction by photoirradiation. Such a photo-reaction catalyst may be called a photo-reaction initiator or photo-polymerization initiator. Favorable examples of the photo-reaction catalyst include a photobase generator (D).

<Photobase generator (D)>

In some preferable embodiments, the sealant sheet comprises a photobase generator (D). As the photobase generator (D), a species that generates a base upon photoirradiation is used. Examples of the photobase generator include $\alpha$-aminoacetophenone compounds; oxime ester compounds; compounds having substituents such as acyloxyimino groups, N-formylated aromatic amino groups, N-acylated aromatic amino groups, nitrobenzyl carbamate groups and alkoxybenzyl carbamate groups; compounds having biguanidic cations. A preferable $\alpha$-aminoacetophenone in particular has two or more nitrogen atoms. For the photobase generator, solely one species or a combination of two or more species can be used.

As the photobase generator, a commercial product can be used as well. Commercial photobase generators include product names WPBG-018 (9-anthramethyl N,N'-diethylcarbamate), WPBG-027 ((E)-1-[3-(2-hydroxyphenyl)-2-propenoyl]piperidine), WPBG-082 (guanidium 2-(3-benzoylphenyl)propionate), WPBG-140 (1-(anthraquinon-2-yl)ethyl imidazole carboxylate), WPBG-266 (1,2-diisopropyl-3-[bis(dimethylamino)methylene]guanidium 2-(3-benzoylphenyl)propionate), WPBG-300 (1,2-dicyclohexyl-4,4,5,5-tetramethylbiguanidium n-butyltriphenylborate) and WPBG-345 (1,2-dicyclohexyl-4,4,5,5-tetramethylbiguanidium tetrakis(3-fluorophenyl)borate) available from Wako Pure Chemical Corporation.

Among these, ionic photobase generators having biguanidic cations are preferable for their abilities to effectively accelerate the anionic addition reaction between epoxy and thiol groups by generating a base upon photoirradiation. Examples of biguanidic cations include alkylbiguanidinium, cycloalkylbiguanidinium, and cycloalkyl-alkylbiguadinium. In a photobase generator, the anion paired with the biguanidic cation can be, for instance, a borate-based anion. Commercial products of this type of photobase generator include the aforementioned WPBG-300 and WPBG-345. Other examples of the anion paired with the biguanidic cation in the photobase generator include carboxylate-based anions. As a commercial product of this type of photobase generator, the aforementioned WPBG-266 can be preferably used.

The amount of the photobase generator to be used can be selected to obtain desirable effects of its use. In some embodiment, the amount of the photobase generator used can be, for instance, 0.01 part by weight or greater relative to 100 parts by weight of the total amount of the epoxy group-containing polysulfide polymer (AB) and the thiol compound (C) (in case of a type (I) sealant sheet) or of the total amount of the thiol group-containing polysulfide polymer (AC) and the epoxy compound (B) (in case of a type (II) sealant sheet). From the standpoint of enhancing the curing properties of the sealant sheet, it is preferably 0.03 part by weight or greater, possibly 0.07 part by weight or greater, or even 0.1 part by weight or greater. From the standpoint of the raw material costs, etc., the amount of the photobase generator used to 100 parts by weight of the total amount is usually preferably 3 parts by weight or less, more preferably 2 parts by weight or less, possibly 1 part by weight or less, 0.7 part by weight or less, 0.5 part by weight or less, or even 0.3 part by weight or less.

<Photosensitizer>

The sealant sheet disclosed herein may include a sensitizer. The use of the sensitizer can increase the utilization efficiency of the irradiated light and improve the sensitivity of the photo-reaction catalyst (e.g., a photobase generator (D)). As a photosensitizer, a suitable species can be selected and used among known materials. Non-limiting examples of the photosensitizer include benzophenone and benzophenone derivatives such as 4-methylbenzophenone, 3-benzoylbiphenyl, 4-(4-methylphenylthio)benzophenone, methyl 2-benzoyl benzoate, 4-phenylbenzophenone, 4,4'-bis(dimethoxy)benzophenone, 4,4'-bis(dimethylamino)benzophenone, 4,4'-bis(diethylamino)benzophenone, methyl-2-benzoylbenzoate, 2-methylbenzophenone, 3-methylbenzophenone, 3,3'-dimethyl-4-methoxybenzophenone and 2,4,6-trimethylbenzophenone; thioxanthone, xanthone and thioxanthone derivatives such as 2-chlorothioxanthone, 4-chlorothioxanthone, 2-isopropylthioxanthone, 4-isopropylthioxanthone, 2,4-dimethylthioxanthone, 2,4-diethylthioxanthone, 1-chloro-4-propoxythioxarithone and 2,4-diethylthioxanthen-9-one; fluorene-based compounds such as 2-hydroxy-9-fluorenone; anthrone and anthrone derivatives such as dibenzosuberone and 2-amino-9-fluorenone; anthraquinone and anthraquinone derivatives such as 2-ethylanthraquinone, 2-hydroxyanthraquinone and 2-aminoanthraquinone; naphthalene derivatives such as 1-methylnaphthalene, 2-methylnaphthalene, 1-fluoronaphthalene, 1-chloronaphthalene, 2-chloronaphthalene, 1-bromonaphthalene, 2-bromonaphthalene, 1-iodonaphthalene, 2-iodonaphthalene, 1-naphthol, 2-naphthol, 1-methoxynaphthalene, 2-methoxynaphthalene, 1,4-dicyanonaphthalene and methyl 3-hydroxy-2- naphthol; anthracene and anthracene derivatives such as 1,2-benzanthracene, 9,10-dichloroanthracene, 9,10-dibromoanthracene, 9,10-diphenyl anthracene, 9-cyanoanthracene, 9,10-dicyanoanthracene and 2,6,9,10-tetracyanoanthracene; nitro compounds such as nitrobenzoate and nitroaniline; and various pigments; but it is not limited to these.

When using a photosensitizer, it can be used in an amount selected to obtain a desirable sensitizing effect. In some embodiments, relative to 100 parts by weight of the total amount of epoxy compound (B) and thiol compound (C), the amount of photosensitizer used can be, for instance, 0.001 part by weight or greater, 0.005 part by weight or greater, 0.01 part by weight or greater, or even 0.05 part by weight or greater. The maximum amount of photosensitizer is not particularly limited. From the standpoint of the curing rate control and storability of the sealant sheet, it is usually suitably 10 parts by weight or less, possibly 5 parts by weight or less, 1 part by weight or less, 0.5 part by weight or less, or even 0.3 part by weight or less.

<Storage stabilizer>

The sealant sheet disclosed herein may further include an optional compound that is useful in inhibiting the photo-curing reaction as far as other properties are not greatly impaired. The use of such a compound can enhance the storability of the sealant sheet prior to use. Examples of storage stabilizer include organic acids, inorganic acids as well as oligomers, polymers, borates and phosphates having acidic groups in the molecules, with them being liquids or solids at room temperature and possibly having non-acidic functional groups. Examples include, but are not limited to, sulfuric acid, acetic acid, adipic acid, tartaric acid, fumaric acid, barbituric acid, boric acid, pyrogallol, phenol resin and a carboxylic acid anhydride. For the storage stabilizer, solely one species or a combination of two or more species can be used. The amount of storage stabilizer used is not particularly limited and can be selected to obtain desirable effects.

Favorable examples of the storage stabilizer include boric acid esters and phosphoric acid esters.

Boric acid esters are liquids or solids at room temperature. Examples include, but are not limited to, trimethyl borate, triethyl borate, tri-n-propyl borate, triisopropyl borate, tri-n-butyl borate, tripentyl borate, triallyl borate, trihexyl borate, tricyclohexyl borate, trioctyl borate, trinonyl borate, tridecyl borate, tridodecyl borate, trihexadecyl borate, trioctadecyl borate, tris(2-ethylhexyloxy)borane, bis(1,4,7,10-tetraoxaundecyl)(1,4,7,10,13-pentaoxatetradecyl)(1,4,7-trioxaundecyl)borane, tribenzyl borate, triphenyl borate, tri-o-tolyl borate, tri-m-tolyl borate and triethanolamine borate.

Phosphoric acid esters include, but are not limited to, ethyl phosphate, butyl phosphate, propyl phosphate, 2-ethylhexyl phosphate, dibutyl phosphate, di-(2-ethylhexyl) phosphate, oleyl phosphate and ethyl diethyl phosphate.

<Filler>

To the sealant sheet disclosed herein, a filler can be added as necessary. This may improve either one or both between the breaking strength and the elongation at break of the cured material. The filler may be useful in adjusting the storage modulus of the sealant sheet. With the filler suitably used, the shape-holding properties and ease of processing of the sealant sheet may be improved. The filler used is not particularly limited. Any of a suitable filler can be used as long as the effect obtainable by the art disclosed herein is not greatly impaired. As the filler, solely one species or a combination of two or more species can be used.

Examples of the material forming the filler include, but are not limited to, talc, silica, glass, carbon black, alumina, clay, mica, aluminum hydroxide, magnesium hydroxide, calcium carbonate, magnesium carbonate, barium sulfate, titanium dioxide, barium titanate, strontium titanate, calcium titanate, magnesium titanate, bismuth titanate, boron nitride, aluminum borate, barium zirconate and calcium zirconate. Particularly preferable examples include talc, silica, glass and calcium carbonate.

The amount of filler to be included is not particularly limited and can be selected to obtain favorable properties. The filler content can be, for instance, 1 % by weight or more of the entire sealant sheet, or also 5 % by weight or more. From the standpoint of obtaining greater effect of the use, it can be 10 % by weight or more, 15 % by weight or more, 20 % by weight or more, or even 25 % by weight or more. The filler content can be, for instance, below 50 % by weight of the entire sealant sheet. From the standpoint of the ease of forming the sheet shape and increasing the stretchiness of the cured material, it is usually suitably below 40 % by weight, or possibly even below 35 % by weight. In some embodiments, the filler content can be below 30 % by weight, or even below 25 % by weight.

The mean particle diameter of the filler is not particularly limited. The mean particle diameter is usually suitably 100 $\mu$m or less, or preferably 50 $\mu$m or less. A smaller mean particle diameter tends to bring a greater effect in improving either or both between the breaking strength and the elongation at break of the cured material. In some embodiments, the filler may have a mean particle diameter of, for instance, 30 $\mu$m or less, 20 $\mu$m or less, 15 $\mu$m or less, 10 $\mu$m or less, or even 5 $\mu$m or less. The filler's mean particle diameter can be, for instance, 0.1 $\mu$m or greater, 0.2 $\mu$m or greater, 0.5 $\mu$m or greater, or even 1 $\mu$m or greater. From the standpoint of the handling properties and dispersibility of the filler, it may be advantageous that the mean particle diameter is not excessively small.

As used herein, the mean particle diameter of the filler refers to the 50th percentile particle diameter by volume (50 % median diameter) in a size distribution obtained by laser scattering/diffraction method analysis.

In some embodiments, a filler formed of a material having a refractive index in the range of 1.56 or higher and below 1.62 can be used. For instance, a glass filler having a refractive index in this range can be used. The refractive index range is exactly or approximately equal to the refractive index (typically about 1.60) of polysulfide polymer (A). Thus, with a filler having a refractive index in the range, the decrease in transmittance of the sealant sheet due to the filler content tends to be smaller as compared with a filler having a refractive index outside the range. With the sealant sheet having a certain level of transmittance, the sealed area is easily observed through the sealant sheet. This can be advantageous also from the standpoint of the ease of placement, etc., when placing the sealant sheet in a designated area.

In the sealant sheet disclosed herein, it is possible to use a filler (e.g., glass filler) having a refractive index in the range of 1.56 or higher and below 1.62 and a filler (e.g., talc) having a refractive index outside the range together. The ratio of the filler having a refractive index in the range to the total amount of the filler(s) in the sealant sheet is, for instance, possibly 10 % by weight or higher, also 25 % by weight or higher, preferably 45 % by weight or higher, yet also possibly 60 % by weight or higher, or 85 % by weight or higher; or it can be even 100 % by weight. In some embodiments, it is preferable to use a filler formed of a material having a refractive index in the range of 1.56 or higher and 1.61 or lower or in the range of 1.57 or higher and 1.60 or lower. The refractive index can be determined, using generally known techniques such as minimum deviation, critical angle and V-block methods. The measurement can be performed using, for instance, a multi-wavelength Abbe refractometer DR-M4 (available from ATAGO Co., Ltd.). Alternatively, nominal values given in a catalog, literature, etc., can be used as well.

The sealant sheet disclosed herein may include other optional components as long as the effect obtainable by the art disclosed herein is not greatly impaired. Examples of such optional components include, but are not limited to, colorants such as dyes and pigments, dispersing agent, plasticizer, softener, flame retardant, anti-aging agent, UV absorber, antioxidant, and photo-stabilizer.

The sealant sheet disclosed herein may include other polymer or oligomer (or optional polymer, hereinafter) besides those described above, for instance, to increase the tightness of adhesion to the target area to be sealed, etc. From the standpoint of the oil resistance of the cured material, the optional polymer content is preferably 10 parts by weight or less, more preferably 5 parts by weight or less, or yet more preferably 1 part by weight or less, relative to 100 parts by weight of the polysulfide polymer (A). The sealant sheet may be essentially free of such an optional polymer. In this description, being essentially free of a certain component means that the component is not included at least intentionally, unless otherwise noted.

In the sealant sheet disclosed herein, the organic solvent content thereof can be, for instance, 5 % by weight or less, 2 % by weight or less, 1 % by weight or less, or even 0.5 % by weight or less; or it can be essentially free of an organic solvent. The organic solvent content can be 0 %. The organic solvent refers to a component that is not supposed to react with other components (especially the epoxy group-containing polysulfide or a curing agent possibly used as necessary) in the sealant sheet, such as toluene, cyclohexanone and trichloroethane.

The type (I) sealant sheet may comprise a thiol compound (C) (or a lower thiol compound, hereinafter) having a Mw of 1000 or lower, preferably 600 or lower, or more preferably 400 or lower. Of the total amount of the entire thiol compound (C) and the epoxy group-containing polysulfide polymer (AB), the amount by weight of the lower thiol compound can be, for instance, 0.1 % by weight or greater, 0.3 % by weight or greater, or even 0.5 % by weight or greater. The lower thiol compound may serve to increase the tack of the sealant sheet disclosed herein. When the tack of the sealant sheet is increased, for instance, the sealant sheet placed in a target area to be sealed may show greater temporary fixing properties to the target area. The temporary fixing properties refer to properties that inhibit the sealant sheet from lifting off or shifting in position from the target area to be sealed until the sealant sheet placed in the target area cures. Upon photoirradiation, the lower thiol compound reacts to be incorporated into the cured material. In some embodiments, of the total amount of the entire thiol compound (C) and the epoxy group-containing polysulfide polymer (AB), the amount by weight of the lower thiol compound can be below 0.1 % by weight, below 0.05 % by weight, or even essentially none. Even in such an embodiment, the sealant sheet disclosed herein has surface tack and can be temporarily fixed to an area to be sealed.

The type (II) sealant sheet may comprise an epoxy compound (B) (or a lower epoxy compound, hereinafter) having a Mw of 1000 or lower, preferably 600 or lower, or more preferably 400 or lower. Of the total amount of the entire epoxy compound (B) and the thiol group-containing polysulfide polymer (AC), the amount by weight of the lower epoxy compound can be, for instance, 0.1 % by weight or greater, 0.3 % by weight or greater, or even 0.5 % by weight or greater. Similar to the lower thiol compound, the lower epoxy compound may serve to increase the tack of the sealant sheet disclosed herein. In some embodiments, of the total amount of the entire epoxy compound (B) and the thiol group-containing polysulfide polymer (AC), the amount by weight of the lower epoxy compound can be below 0.1 % by weight, below 0.05 % by weight, or even essentially none. Even in such an embodiment, the sealant sheet disclosed herein may have surface tack and can be temporarily fixed to a target area to be sealed.

<Support substrate>

The sealant sheet disclosed herein may have a support substrate. Such a sealant sheet may have a support substrate and a seal layer placed on at least one face (e.g., each face) of the support substrate. The seal layer is formed from a material capable of forming the sealant sheet. Such an on-support-substrate (substrate-supported) sealant sheet tends to have excellent processability and applicability to target objects as well as great handling properties.

Non-limiting examples of the support substrate material include various kinds of resin film such as polyolefin film formed of polyethylene (PE), polypropylene (PP) or like, polyester film formed of polyethylene terephthalate (PET), fluororesin film formed of polytetrafluoroethylene (PTFE) or like, polyvinyl chloride film, etc.; woven and nonwoven fabrics of single or blended spinning of various fibrous materials (possibly natural fibers such as hemp and cotton, synthetic fibers such as polyester and vinylon, semi-synthetic fibers such as acetate, etc.). It can be a layered body as a composite of these. As the support substrate, it is preferable to use a species comprising a self-shape-retaining (self-standing or independent) resin film as base film. In particular, polyester film such as PET film is preferable. It is noted that the term "resin film" refers to void-free resin film that has a non-porous structure and is typically essentially free of pores. Thus, the concept of resin film is distinct from foam film and nonwoven fabric. The resin film may have a monolayer structure or a multilayer structure with two or more layers. The resin film may be unstretched or stretched (e.g., uniaxially stretched or biaxially stretched).

To the support substrate (e.g., resin film), known additives can be added as necessary, such as photostabilizer, antioxidant, antistatic agent, colorant (dye, pigment, etc.), filler, slip agent and anti-blocking agent. The amount of an additive used is not particularly limited and can be suitably selected in accordance with the purpose, etc.

In an embodiment having a support substrate, the support substrate may have a transmittance, for instance, above 5 %. It can also be above 10 %, above 15 %, or even above 20 %. From the standpoint of the curing properties by photoirradiation, it is suitably 50 % or higher, preferably 70 % or higher, or possibly 90 % or higher. The support substrate's maximum transmittance is not particularly limited and can be 100 %. From a practical standpoint, it can be 80 % or lower, 60 % or lower, or even 40 % or lower. The support substrate disclosed herein can also be implemented in an embodiment having a transmittance of 30% or lower, 20 % or lower, or 15 % or lower. The transmittance is determined by the same method as the sealant sheet transmittance measurement method.

The support substrate's thickness is not particularly limited and can be selected in accordance with the purpose, application, etc. The support substrate may have a thickness of, for instance, about 1000 $\mu$m or less, or about 300 $\mu$m or less. From the standpoint of the curing properties by photoirradiation, it is suitably about 100 $\mu$m or less, preferably about 80 $\mu$m or less, possibly about 50 $\mu$m or less, about 30 $\mu$m or less, or even 15 $\mu$m or less. With decreasing thickness of the support substrate, the sealant sheet's flexibility and conformability to surface structures of target objects tend to improve. From the standpoint of the ease of handling, processing and like, the support substrate can have a thickness of 1 $\mu$m or greater, 2 $\mu$m or greater, 5 $\mu$m or greater, or even 10 $\mu$m or greater. In some embodiments, the support substrate has a thickness of preferably 20 $\mu$m or greater (e.g., 25 $\mu$m or greater), more preferably 30 $\mu$m or greater, possibly 50 $\mu$m or greater, or even 70 $\mu$m or greater.

<Method for producing sealant sheet>

Described below are embodiments of the sealant sheet production method disclosed herein. It is noted that the following description is for illustration purposes and does not limit the method for producing the sealant sheet disclosed herein. For instance, for the convenience of description, embodiments using photobase generators and fillers are described below; however, the sealant sheet disclosed herein is not to be limited to embodiments comprising these components.

The type (I) sealant sheet comprises an epoxy group-containing polysulfide polymer (AB) and a thiol compound (C) (e.g., an aforementioned lower thiol compound) together. The sealant sheet having such a composition can be produced, for instance, by a method that comprises obtaining an epoxy group-containing polysulfide polymer (AB); adding and mixing a thiol compound (C), a photobase generator (D) and a filler with the epoxy group-containing polysulfide polymer (AB); and molding the resulting mixture into a sheet shape. When the epoxy group-containing polysulfide polymer (AB) is a reaction product of a thiol group-containing polysulfide, a bifunctional epoxy compound and a polyfunctional epoxy compound, the step of obtaining the mixture may include, in the following order, preparing the reaction product of the thiol group-containing polysulfide, the bifunctional epoxy compound and the polyfunctional epoxy compound; and adding and mixing a thiol compound (C), a photobase generator (D) and a filler with the reaction product. Alternatively, the filler can be mixed together when preparing the reaction product.

The type (II) sealant sheet comprises a thiol group-containing polysulfide polymer (AC) and an epoxy compound (B) (e.g., an aforementioned lower epoxy compound) together. The sealant sheet having such a composition can be produced, for instance, by a method that comprises obtaining a thiol group-containing polysulfide polymer (AC); adding and mixing an epoxy compound (B), a photobase generator (D) and a filler with the thiol group-containing polysulfide polymer (AC); and molding the resulting mixture into a sheet. When the thiol group-containing polysulfide polymer (AC) is a thiol modification product of an epoxy group-containing polysulfide polymer, the step of obtaining the mixture may include, in the following order, preparing the thiol group-containing polysulfide polymer (AC) by allowing thiol groups of a compound having two or more thiol groups per molecule to react with epoxy groups of the epoxy group-containing polysulfide polymer (AB); and adding and mixing an epoxy compound (B), a photobase generator (D) and a filler with the thiol group-containing polysulfide polymer (AC). Alternatively, the filler can be mixed together when preparing the reaction product.

With respect to the preparation of the reaction product, the description above may apply. Thus, a redundant description is omitted. As for a system that can be used for mixing the reaction product and added components, examples include, but are not limited to, sealed mixing machines or batch mixing machines such as Banbury mixer, kneader, two-roller mill and three-roller mill; and continuous mixing machines such as single-screw extruder and two-screw extruder.

As the method for molding the mixture into a sheet, a single method or a combination of methods can be employed among known sheet forming methods such as press-molding, calender molding and hot-melt extrusion. The press-molding can be normal pressing or vacuum pressing. From the standpoint of preventing the sheet from trapping air bubbles and inhibiting thermal denaturation of the mixture, in some embodiments, vacuum pressing or calender molding can be preferably applied. The resulting sealant sheet is layered on a release liner to form a release-linered sealant sheet shown in Fig. 1 or Fig. 2. Alternatively, the sheet can be formed by applying the mixture onto a release liner or support substrate with a conventional coater such as a gravure roll coater. The on-support-substrate (substrate-supported) sealant sheet is made into a release-linered sealant sheet by layering a release liner on the surface. The resulting sealant sheet can be then subjected, in this form, to storage, processing (e.g., slit processing into a prescribed width, processing a roll into flat sheets, punching out prescribed shapes, etc.), transportation, etc.

<Release liner>

The sealant sheet disclosed herein has a release liner layered on the surface. The surface of the sealant sheet is thus protected with the release liner, thereby preventing deformation by external forces and contamination such as dirt accumulation. The sealant sheet can be handled while being layered on the release liner and can be applied to a target object while being layered on the release liner. Such a release-linered sealant sheet has excellent handling properties and quality retention, and can be placed easily and precisely in a desirable area.

The release liner forming the release-linered sealant sheet disclosed herein has a light transmittance of 20 % or higher in the 350-450 nm wavelength range. This can help the sealant sheet undergo curing by through-liner photoirradiation. From the standpoint of the ease of curing by through-liner photoirradiation, the light transmittance is preferably 25 % or higher, more preferably 30 % or higher, yet more preferably 35 % or higher, possibly 50 % or higher, 70 % or higher, or even 90 % or higher. In the art disclosed herein, at least the released liner placed on the photoirradiation side may have an aforementioned light transmittance. In an embodiment having two release liners on the respective faces of the sealant sheet, the two release liners may have such light transmittance values; or only one (the photoirradiation-side one) may have such a light transmittance.

The release liner's maximum light transmittance is not particularly limited. From the standpoint of the visibility, it is preferably 80 % or lower. Such a release liner allows easy confirmation of its presence on a sealant sheet. For instance, upon application of the sealant sheet to a target object, it can prevent forgetting of release liner removal. From such a standpoint, the light transmittance is preferably 75 % or lower, more preferably 70 % or lower, or yet more preferably 65 % or lower.

The release liner's light transmittance in the 350-450 nm wavelength range is determined by the method described later in Examples. In this Description, as an index of the light transmittance, the light transmittance at 365 nm wavelength is used.

The release liner's light transmittance can be adjusted by a selection of release liner substrate material (resin material), additive species (e.g., colorant such as pigment) and their amounts, a selection of release agent, etc.

Herein, that the release liner has at least the prescribed light transmittance means that it has such a light transmittance in a major area (more than 50 %, e.g., 70 % or more) of the entire area laminated with the sealant sheet. From the standpoint of even and efficient photo-curing of the sealant sheet laminated with the release liner, the release liner disclosed herein preferably has the light transmittance (20 % or higher, preferably 20 % to 80 %) in essentially the entire area of the release liner surface. Here, "essentially the entire area of the release liner surface" means that in the release liner surface, with the entire area laminated with the sealant sheet being 100 %, the ratio of the area not having the light transmittance (e.g., due to placement of prints, etc.) is less than 5 % of the entire area. The ratio of the area not having the light transmittance can be below 3 %, or even below 1 %. In other embodiments, in the release liner surface, the ratio of the area not having the light transmittance to the entire area laminated with the sealant sheet can be suitably selected in a range (e.g., $\leq$ ~30 %, or even $\leq$ -10 %) that does not inhibit curing of the photo-curable sealant sheet.

For even curing of the sealant sheet laminated with the release liner disclosed herein, the release liner preferably has a uniform light transmittance in these light transmittance ranges in essentially the entire area of the release liner surface. For instance, in the release liner surface, the light transmittance of the entire area laminated with the sealant sheet is preferably within a $\pm$ 10 % (e.g., $\pm$ 5 %) range. By this, an evenly cured sealant can be preferably obtained by through-liner photoirradiation.

The release liner is not particularly limited. Examples include a release liner having a release layer on the surface of a release liner substrate and a release liner formed from low-adhesive resin film (polyolefinic resin film, fluororesin film) such as a fluoropolymer (PTFE, etc.) and polyolefinic resin (PE, PP, etc.).

As the release liner disclosed herein, it is preferable to use a species having a release layer on a release liner substrate. The release layer may be formed by subjecting the release liner substrate to surface treatment with a release agent. The release agent can be a known release agent such as silicone-based release agent, long-chain alkyl-based release agent, fluorine-based release agent or molybdenum(IV) sulfide. In some embodiments, it is preferable to use a release liner having a release layer formed with a silicone-based release agent. The release layer's thickness or formation method is not particularly limited and can be selected to obtain suitable release properties on the release liner's release face.

As the release liner substrate, various kinds of plastic film can be preferably used. As used herein, the plastic film is typically a non-porous sheet and conceptually distinct from, for instance, nonwoven fabric (i.e., conceptually excludes nonwoven fabric).

Examples of the plastic film material include polyester-based resins such as PET and polyolefinic resins such as PE and PP. It is possible to use a release liner substrate formed from one species or a mixture of two or more species among these resins. A particularly preferable release liner substrate is polyester-based film (e.g., PET film) formed from a polyester-based resin.

The plastic film used as the release liner substrate can be unstretched film, uniaxially stretched film or biaxially stretched film. The plastic film may have a monolayer structure or a multilayer structure including two or more sublayers. The plastic film may include known additives that can be used in release liner substrates, such as antioxidant, anti-aging agent, heat-resistant stabilizer, photostabilizer, UV absorber, colorant such as pigment and dye, slip agent, filler, antistatic agent and nucleating agent. In a multilayer plastic film, each additive can be included in all or just some of the sublayers.

The release liner having an aforementioned light transmittance (especially ≤ 80 %) can be preferably prepared by using a suitable colorant. As the colorant, heretofore known pigments and dyes can be used. As a pigment, a species that is likely to bring about a certain transmittance is preferably used, for instance, among inorganic pigments such as zinc carbonate, zinc oxide, zinc sulfide, talc, kaolin, calcium carbonate, titanium oxide, silica, lithium fluoride, calcium fluoride, barium sulfate, alumina, zirconia, iron oxide-based, iron hydroxide-based, chromium oxide-based, chromium hydroxide-based, spinel calcinate-based, chromic acid-based, chromium vermilion-based, iron blue-based, cobalt blue-based, aluminum powder-based, bronze powder-based, silver powder-based and calcium phosphate pigments; and organic pigments such as phthalocyanine-based, azo-based, condensed azo-based, azo lake-based, anthraquinone-based, perylene-perinone-based, flavone, indigo-based, thioindigo-based, isoindolinone-based, azomethine-based, dioxazine-based, quinacridone-based, aniline black-based, triphenylmethane-based, and carbon black-based pigments. As a dye, a species that is likely to bring about a certain transmittance is preferably used, for instance, among azo-based dyes, anthraquinone, quinophthalone, styryl, diphenylmethane, triphenylmethane, oxazine, triazine, xanthan, methane, azomethine, acridine, and diazine. For the colorant, solely one species or a suitable combination of two or more species can be used.

The light transmittance can be obtained with the inclusion of a suitable colorant in a layer (release liner substrate, release layer or other arbitrary layer) that constitutes the release liner. In some preferable embodiments, the release liner substrate includes the colorant.

Although no particular limitations are imposed, the release liner disclosed herein having a light transmittance in the prescribed range may have at least the prescribed light transmittance while having one, two or more colors, for instance, black, gray, white, red, blue, yellow, green, yellow-green, orange, purple, gold, silver and pearl. From the standpoint of the visibility, it preferably has a color of gray, red, blue, yellow, green, yellow-green, orange or purple. From the standpoint of combining visibility and transparency for photo-curing, it more preferably has a color of blue or green. A blue color is particularly preferable.

In the art disclosed herein, the color blue has a wavelength of visible spectrum ranging from 360 nm or greater and less than 480 nm. The color green has a wavelength of visible spectrum ranging from 480 nm or greater and less than 560 nm.

In an embodiment where the sealant sheet has the first and second release liners on the respective faces, the first and second release liners can be identical in materials and composition or different in materials and/or composition.

The release-linered sealant sheet disclosed herein is a separable laminate of a release liner and a sealant sheet. Thus, the peel strength of the release liner to the sealant sheet is preferably limited up to a prescribed value. In some preferable embodiments, the release liner has a peel strength of about 3

N/50mm or less, more preferably 1 N/50mm or less, 0.70 N/50mm or less, or even 0.50 N/50mm or less. The minimum peel strength of the release liner is suitably 0.01 N/50mm or greater. From the standpoint of providing protection with the release liner and preventing its lifting, it can be 0.05 N/50mm or greater. The release liner's peel strength can be adjusted by release treatment on the release liner surface, etc. In an embodiment having the first and second release liners on the respective faces of the sealant sheet, the release liners preferably have different peel strengths in view of removal works. Alternatively, they may be designed to have comparable values.

The release liner's peel strength is determined with a 150 mm long, 50 mm wide piece cut out of the release-linered sealant sheet, at a tensile speed of 300 mm/min at a peel angle of 180° in an atmosphere at 23 °C and 50 %RH.

In some embodiments, the release liner may satisfy the formula (1):

$$E' \times t \geq 1 \times 10^4 \ (N/m) \qquad (1)$$

Here, in the formula (1), E' is the modulus (MPa) and t is the thickness ($\mu$m) of the release liner. This helps reduce elongation of the release-linered sealant sheet when the sealant sheet is applied to a target object.

In the formula (1), E'·t (N/m) is preferably $3 \times 10^4$ N/m or greater, more preferably $8 \times 10^4$ N/m or greater, yet more preferably $1 \times 10^5$ N/m or greater, $3 \times 10^5$ N/m or greater, or possibly even $5 \times 10^5$ N/m or greater. The maximum E'·t (N/m) can be selected in accordance with the purpose, etc., and thus is not limited to a specific range. E'·t (N/m) can be about $1 \times 10^6$ N/m or less. From the standpoint of the handling properties based on good flexibility and conformability to the target area's surface structure, it can be $8 \times 10^5$ N/m or less, $4 \times 10^5$ N/m or less, $2 \times 10^5$ N/m or less, or even $1.5 \times 10^5$ N/m or less.

In some embodiments, the release liner may satisfy the formula (2):

$$E' \times t \times w \geq 250 \ (N) \qquad (2)$$

Here, in the formula (2), E' is the modulus (MPa), t is the thickness (mm) and w is the minimum width (mm) of the release liner. This helps reduce elongation of the release-linered sealant sheet when the sealant sheet is applied to a target object. The release liner preferably satisfies the formulas (1) and (2).

In the formula (2), E'·t·w (N) is preferably 800 N or greater, more preferably 1000 N or greater, yet more preferably 1200 N or greater, particularly preferably 2000 N or greater, possibly 3000 N or greater, or even 5000 N or greater. The maximum E'·t w (N) can be selected in accordance with the purpose, etc., and thus is not limited to a specific range. E'·t w (N) can be about $1 \times 10^5$ N or less. From the standpoint of the handling properties based on good flexibility and conformability to the target area's surface structure, it can be $5 \times 10^4$ N or less, $3 \times 10^4$ N or less, $1.5 \times 10^4$ N or less, $1 \times 10^4$ N or less, 8000 N or less, or even 6000 N or less.

The release liner's modulus E' is suitably selected in a range satisfying the formula (1) or (2) and is not limited to a specific range. In some embodiments, the release liner has a modulus E' of about 50 MPa or greater, or possibly about 100 MPa or greater. From the standpoint of reducing elongation of the sealant sheet, it is suitably about 200 MPa or greater, preferably about 300 MPa or greater, or more preferably about 800 MPa or greater. In other embodiments, the release liner has a modulus E' of about 1000 MPa or greater. From the standpoint of reducing elongation of the sealant sheet, it is possibly about 1500 MPa or greater, suitably about 2000 MPa or greater, preferably about 2500 MPa or greater, more preferably about 3000 MPa or greater, or possibly even 3500 MPa or greater. The release liner's maximum modulus E' is, for instance, 10000 MPa or less. From the standpoint of the handling properties based on good flexibility and conformability to the target area's surface structure, it is suitably about 5000 MPa or less, preferably about 4000 MPa or less, possibly about 3600 MPa or less, about 3200 MPa or less, about 2700 MPa or less, about 2200 MPa or less, about 1600 MPa or less, or even about 800 MPa or less. The release liner's modulus E' can be selected and adjusted through a selection of release liner materials, etc.

The release liner's modulus E' is determined using a film viscoelasticity analyzer. In particular, a release liner being analyzed is cut 10 mm in width and 50 mm in length. With the chuck distance set to 20 mm, at 1 Hz and 0.05 % distortion, while the temperature is raised at a rate of 10 °C/min from -50 °C to 100 °C, the modulus at 23 °C is determined and recorded as modulus E' (MPa). As the viscoelasticity analyzer, for instance, product name RSA3 (available from TA Instruments) can be used. The stretching direction is preferably in MD (machine direction).

The release liner's minimum width w is not particularly limited as a suitable size can be selected in accordance with the target area, purpose, etc. For instance, it is suitably selected in a range satisfying the formula (2). The release liner can have a minimum width w of 1 mm or greater, 2 mm or greater, or even 5 mm or greater. From the standpoint of reducing elongation of the sealant sheet, the release liner has a minimum width w of preferably 7 mm or greater, more preferably 10 mm or greater, yet more preferably 15 mm or greater, particularly preferably 20 mm or greater, possibly 30 mm or greater, 40 mm or greater, or even 50 mm or greater. The release liner can have a minimum width w of 500 mm or less, 300 mm or less, or even 100 mm or less. From the standpoint of the handling properties, etc., the release liner can have a minimum width w of 70 mm or less, 45 mm or less, 35 mm or less, 25 mm or less, 22 mm or less, 18 mm or less, 12 mm or less, or even 7 mm or less. When the release liner is in band form with a mostly constant width, the release liner's minimum width w can be the width of the release liner. The sealant sheet may have the same shape as the support layer. Thus, the sealant sheet's width (which includes its minimum width) can be the same as the support layer's width (which includes its minimum width).

The release liner's thickness is not particularly limited and can be about 10 $\mu$m to 500 $\mu$m. From the standpoint of the release liner's strength and handling properties, the release liner has a thickness of suitably 20 $\mu$m or greater

(e.g., 25 $\mu$m or greater), preferably 30 $\mu$m or greater, possibly 35 $\mu$m or greater, 40 $\mu$m or greater, 45 $\mu$m or greater, 50 $\mu$m or greater, or even 70 $\mu$m or greater. The release liner having a large thickness is advantageous from the standpoint of preventing deformation of the sealant sheet applied on the target object as well. From the standpoint of the release liner's handling properties (e.g., ease of winding), etc., the release liner has a thickness of suitably 300 $\mu$m or less, preferably 200 $\mu$m or less, more preferably 150 $\mu$m or less, yet more preferably 100 $\mu$m or less, particularly preferably 80 $\mu$m or less, possibly 50 $\mu$m or less, or even 30 $\mu$m or less. With a thin release liner, when applying the sealant sheet laminated with the release liner to a target object, it tends to show excellent conformability to the surface structure of the target object. In an embodiment having the first and second release liners on the respective faces of the sealant sheet, the thicknesses of the first and second release liners are preferably different in view of removal works; or they can be the same.

The release liner's thickness can be specified in relation to the sealant sheet's thickness. From the standpoint of efficiently photo-curing the sealant sheet, the ratio ($T_R/T_S$) of thickness $T_R$ of release liner (in particular, the photoirradiation-side release liner) to thickness $T_S$ of sealant sheet is, for instance, suitably about 1 or lower, preferably about 0.5 or lower, or possibly about 0.3 or lower. A constitution satisfying the $T_R/T_S$ ratio tends to show excellent conformability to the surface structure of a target object when the sealant sheet is applied along with the laminated release liner to the target object. The minimum $T_R/T_S$ ratio value is suitably, for instance, about 0.01 or higher. From the standpoint of the handling properties, etc., it is preferably about 0.05 or higher, possibly about 0.1 or higher, or even 0.15 or higher.

<Applications (usages)>

There are no particular limitations to the material of the area to be sealed with the sealant sheet disclosed herein. The material can be, for instance, a metal, a resin, a composite material of these, etc. More specific examples include metal and metalloid materials such as iron, iron alloys (carbon steel, stainless steel, chromium steel, nickel steel, etc.), aluminum, aluminum alloys, nickel, tungsten, copper, copper alloys, titanium, titanium alloys and silicon; resin materials such as polyolefin resins, polycarbonate resins, acrylic resins, and acrylonitrile resins (PAN); ceramic materials such as alumina, silica, sapphire, silicon nitride, tantalum nitride, titanium carbide, silicon carbide, gallium nitride, and plaster; glass materials such as aluminosilicate glass, soda lime glass, soda aluminosilicate glass, and quartz glass; and laminates and composites of these. Favorable examples of the metal and metalloid materials include light metals such as aluminum and titanium as well as alloys comprising the light metals as primary components. Examples of an aluminum alloy include duralumin (e.g., duralumin A2024, duralumin A2017, etc.). Examples of the composites include carbon fiber reinforced plastic (CFRP) and glass fiber reinforced plastic (FRP). The art disclosed herein is preferably used on articles or parts having to-be-sealed areas formed from these materials.

The sealant sheet exists as a non-liquid (i.e. solid) sheet in a temperature range around 25 °C; and therefore, unlike a liquid sealant, it is unnecessary for a worker to control the thickness when placing it in a target area to be sealed. In addition, unlike a liquid sealant, the sealant sheet can be pre-cut to fit a desired external form and placed in the target area to be sealed (typically adhered with the tack of the sealant sheet). Alternatively, the sealant sheet in roll form can be applied to the target area while unwinding the roll and the remaining sealant sheet can be cut off. The use of the sealant sheet disclosed herein can fundamentally solve problems arising during liquid sealant application such as dripping, uneven application and excess spreading, significantly reducing the working time. It is noted that until put to use (i.e., prior to photoirradiation), the release-linered sealant sheet is preferably stored in an area (dark area) where light that affects photo-curing is blocked or limited, such as a darkroom. The release-linered sealant sheet in storage can be in sheet form (possibly having a shape corresponding to the purpose, etc.) or in roll form.

The sealant sheet disclosed herein undergoes curing by photoirradiation. In particular, the sealant sheet can be cured by through-liner photoirradiation while laminated with the release liner. While no particular limitations are imposed, in examples of preferable embodiments, upon photoirradiation, a base is generated from the photobase generator (D) and the anionic addition reaction is accelerated between epoxy and thiol groups in the sealant sheet, whereby the sheet undergoes curing. In other words, the art disclosed herein encompasses a method comprising a step of obtaining a release-linered sealant sheet having a photo-curable sealant sheet and a release liner placed on at least one face of the sealant sheet; and a step of subjecting the sealant sheet to through-liner photoirradiation. According to such a method, with easy handling, the sealant sheet can efficiently undergo curing. It is noted that this method can be part of a sealing method using a sealant sheet.

Photoirradiation can be performed, using a suitable known light source, for instance, a chemical lamp, a blacklight (e.g., a blacklight available from Toshiba Lighting & Technology Corporation) and a metal halide lamp. In some embodiments, a light source having a spectral power distribution in the wavelength range from 250 nm to 450 nm can be preferably used. A sensitizer can be included in the sealant sheet to increase the utilization efficiency of the light irradiated by the light source. For instance, when using a light source having a spectral power distribution in the wavelength range from 350 nm to 450 nm, the use of sensitizer is especially effective.

The method (typically a sealing method) in the art disclosed herein may include a step of applying the second face of the sealant sheet to a target object while the release liner is placed on the first face of the sealant sheet. As described above, the sealant sheet can undergo curing by through-liner photoirradiation; and therefore, before curing treatment by photoirradiation, it can be applied along with the release liner to a target object. By such a method, the sealant sheet can be easily and precisely applied to a target object. In this embodiment, the sealant sheet can be subjected to photoirradiation with the sheet placed in the area to be sealed or can be subjected to, for instance, through-liner photoirradiation before applied to the target object. In other embodiments, the step of applying the sealant sheet to the target object can be carried out after the release liner is removed from the sealant sheet.

The art disclosed herein includes the sealant sheet's highly flexible setting of curing rates after curing treatment. For instance, the curing rate can be intentionally prolonged. Thus, the curing rate of the sealant sheet after curing treatment can be suitably designed; and through-liner photoirradiation can be carried out to allow the sealant sheet to undergo curing in suitable timing in accordance with the curing rate. This means that the photoirradiation is not limited to a specific instance. For instance, the anionic addition reaction between epoxy and thiol groups may proceed slowly as compared with general radical polymerization; and therefore, the sealant sheet disclosed herein may gradually cure. Through-liner photoirradiation to the sealant sheet can be carried out, for instance, with the sealant sheet laminated with the release liner, before or after the sealant sheet is applied to a target object. The sealant sheet disclosed herein can also be preferably used in an embodiment where photoirradiation is performed in advance and the sheet is placed without delay (immediately) in the area to be sealed. According to this embodiment, good curing can be obtained even when it is a sealant sheet used in a way where uniform irradiation with sufficient light is difficult to achieve after the sheet is placed in the area to be sealed (e.g., a sealant sheet used to seal opaque members together, etc.).

The photo-irradiation before and after application to target objects includes an embodiment where the photoirradiation is carried out while the sealant sheet is being applied. Examples include an embodiment where the sealant sheet with its backside protected with a release liner is applied to a target object; and the application is followed by photoirradiation through the release liner. The release liner is on the backside of the sealant sheet; and therefore, a press-bonding means such as a roller can work through the release liner to tightly adhere the sealant sheet and the target object. In the presence of the release liner on the backside, a relatively soft sealant sheet in some sort of half-cured state can be press-bonded directly with a roller or like, and good press-bonding of the sealant sheet to the target object can be preferably obtained.

The sealing method in the embodiment may include a step of applying the second face of the sealant sheet to a target object while a release liner is placed on the first face of the sealant sheet (application step); and a step of subjecting the sealant sheet to photoirradiation through the release liner (photoirradiation step). The application step and photoirradiation step can be preferably carried out in series in this order. The photoirradiation step can be performed first followed by the application step. Specific examples include an embodiment using a system unit equipped with a sealant sheet press-bonding means (e.g., a roller) and a photoirradiation device (including a light source for photoirradiation). For instance, by allowing the system to move in relation to a band of the release-linered sealant sheet (e.g., relationally move in the length direction of the sealant sheet), press-bonding and curing treatment of the sealant sheet onto the target object can be carried out in one step. This can reduce the number of steps and the processing time, and thus is advantageous in increasing the productivity.

With respect to the release-linered sealant sheet applied onto the target object as described above, the release liner is removed afterwards from the sealant sheet. The release liner is preferably transparent for efficient photoirradiation to the sealant sheet. However, with such a transparent release liner, it is sometimes difficult to determine whether or not the release liner is present on the sealant sheet. In such a case, removal of the release liner may suffer a decrease in efficiency or it can be forgotten. By using the release liner having up to a certain light transmittance value (typically up to 80 %) in the 350-450 nm wavelength range, for release liner removal, the presence of the release liner on the sealant sheet can be easily confirmed, facilitating removal of the release liner and preventing forgetting of release liner removal. Upon removal of the release liner from the sealant sheet placed on the target object, sealing of the target object is completed.

The cured material formed from the sealant sheet disclosed herein or the cured sealant has a tensile strength at break of suitably 0.7 MPa or greater, preferably 0.9 MPa or greater, more preferably greater than 1.0 MPa, possibly 1.1 MPa or greater, or even 1.15 MPa or greater, determined by the method described later in working examples. In some embodiments, the tensile strength at break can be 1.2 MPa or greater, or even 1.3 MPa or greater. The maximum tensile strength at break is not particularly limited. From the standpoint of readily obtaining other physical properties in combination, it can be, for instance, 3 MPa or less.

The cured material formed from the sealant sheet disclosed herein or the cured sealant has an elongation at break of suitably 100 % or greater, preferably 120 % or greater, possibly 150 % or greater, 200 % or greater, or even 250 % or greater, determined by the method described below. The maximum elongation at break is not particularly limited. From the standpoint of readily obtaining other physical properties in combination, it can be, for instance, 600 % or less, or even 400 % or less.

(Measurement of elongation at break)

Using a blacklight available from Toshiba Lighting & Technology Corporation, one face of the sealant sheet is irradiated with light at 2000 mJ/cm$^2$. The irradiated sealant sheet is stored in an environment at 25 °C for 14 days. The resulting cured material (cured sealant) is then cut into a 10 mm wide, 50 mm long rectangle to prepare a sample piece. The sample piece thus prepared is clamped in the chuck of a tensile tester at a chuck distance of 20 mm. Based on JIS K6767, the sample piece is stretched at a rate of 50 mm/min. From the chuck distance (L1) at which the sample breaks and the initial chuck distance (L0) at the start of stretching, the elongation at break is determined by the next equation:

$$\text{Elongation at break (\%)} = ((L1 - L0)/L0) \times 100$$

The matters disclosed in this description include the following:

(1) A release-linered sealant sheet having a photo-curable sealant sheet, and a release liner placed on at least one (first) face of the sealant sheet, wherein
the release liner has a light transmittance of 20 % or higher in the wavelength range from 350 nm to 450 nm.
(2) The release-linered sealant sheet according to (1) above, wherein the release liner has a light transmittance of 80 % or lower in the 350-450 nm wavelength range.
(3) The release-linered sealant sheet according to (1) or (2) above, wherein the sealant sheet has a storage modulus of 0.005 MPa or greater and 0.8 MPa or less at 25 °C.
(4) The release-linered sealant sheet according to any of (1) to (3) above, wherein the sealant sheet is formed of a polysulfide-based sealant.
(5) The release-linered sealant sheet according to any of (1) to (4) above, wherein the sealant sheet comprises a photobase generator.
(6) The release-linered sealant sheet according to (5) above, wherein the photobase generator is an ionic photobase generator having a biguanidic cation.
(7) The release-linered sealant sheet according to any of (1) to (6) above, wherein the sealant sheet comprises

an epoxy group-containing polysulfide polymer (AB) having two or more epoxy groups per molecule; and
a thiol compound (C) having two or more thiol groups per molecule.

(8) The release-linered sealant sheet according to any of (1) to (7) above, wherein the sealant sheet comprises the following components:

an epoxy group-containing polysulfide polymer (AB) having two or more epoxy groups per molecule,
a thiol compound (C) having two or more thiol groups per molecule, and
a photobase generator (D).

(9) The release-linered sealant sheet according to (7) or (8) above, wherein the epoxy group-containing polysulfide polymer (AB) is an epoxy-bi-terminated polysulfide.
(10) The release-linered sealant sheet according to any of (7) to (9) above, wherein the thiol compound (C) has a thiol equivalence of 45 g/eq or higher and 450 g/eq or lower.
(11) The release-linered sealant sheet according to any of (7) to (10) above, wherein the epoxy group-containing polysulfide polymer (AB) is a reaction product of a thiol-bi-terminated polysulfide having a disulfide structure in its main chain and having a Mw of 500 to 10000, and an epoxy compound having two or more epoxy groups per molecule.
(12) The release-linered sealant sheet according to (11) above, wherein the epoxy compound comprises a bifunctional epoxy compound.
(13) The release-linered sealant sheet according to (12) above, comprising, as the bifunctional epoxy compound, an epoxy compound having a five-membered or larger carbon ring structure in its molecule.
(14) The release-linered sealant sheet according to any of (11) to (13) above, wherein the epoxy compound comprises a trifunctional or higher polyfunctional epoxy compound.
(15) The release-linered sealant sheet according to (14) above, wherein the sealant sheet comprises a novolac epoxy resin as the polyfunctional epoxy compound.
(16) The release-linered sealant sheet according to any of (1) to (6) above, wherein the sealant sheet comprises the following components:

a thiol group-containing polysulfide polymer (AC) having two or more thiol groups per molecule,

an epoxy compound (B) having two or more epoxy groups per molecule, and
a photobase generator (D).

(17) The release-linered sealant sheet according to (16) above, wherein the thiol group-containing polysulfide polymer (AC) is a thiol-bi-terminated polysulfide.
(18) The release-linered sealant sheet according to (16) or (17) above, wherein the epoxy compound (B) has an epoxy equivalence of 50 g/eq or higher and 600 g/eq or lower.
(19) The release-linered sealant sheet according to any of (7) to (18) above, wherein the photobase generator (D) is an ionic photobase generator having a biguanidic cation.
(20) The release-linered sealant sheet according to any of (1) to (19) above, wherein the sealant sheet further comprises a sensitizer.
(21) The release-linered sealant sheet according to any of (1) to (20) above, wherein the sealant sheet further comprises a filler.
(22) The release-linered sealant sheet according to (21) above, wherein the filler content is 1 % by weight or more and less than 40 % by weight of the entire sealant sheet.
(23) The release-linered sealant sheet according to (21) or (22), wherein the filler has a mean particle diameter of 0.1 μm or greater and 30 μm or less.
(24) The release-linered sealant sheet according to any of (1) to (23) above, wherein the sealant sheet has a thickness of 0.01 mm or greater and 10 mm or less.
(25) A release-linered cured sealant having a photo-cured sealant in sheet form, and a release liner placed on one (first) face of the cured sealant, wherein
the release liner has a light transmittance of 20 % or higher in the wavelength range from 350 nm to 450 nm.
(26) A method comprising

a step of obtaining a release-linered sealant sheet having a photo-curable sealant sheet and a release liner placed on at least one face of the sealant sheet; and
a step of subjecting the sealant sheet to photoirradiation through the release liner;
wherein,
the release liner used in this method has a light transmittance of 20 % or higher in the 350-450 nm wavelength range.

(27) The method according to (26) above, the method further comprising

a step of removing the release liner (of the release-linered sealant sheet) from the sealant sheet, wherein
the release liner has a light transmittance of 20 % to 80 % in the 350-450 nm wavelength range.

(28) A sealing method comprising

a step of obtaining a release-linered sealant sheet having a photo-curable sealant sheet and a release liner placed on at least one face of the sealant sheet; and
a step of subjecting the sealant sheet to photoirradiation through the release liner;
the method further comprising
a step of applying an exposed face of the sealant sheet to a target object before, after or during the photoirradiation, wherein the sealant sheet is applied to the target object while the release liner is placed on one face of the sealant sheet or after the release liner is removed from the sealant sheet; and
after the photoirradiation, a step of removing the release liner (placed on the one face of the sealant sheet) from the sealant sheet after the photoirradiation;
wherein,
the release liner has a light transmittance of 20 % or higher (preferably 20 % to 80 %) in the 350-450 nm wavelength range.

[Examples]

Several working examples related to the present invention are described below, but the present invention is not limited to these examples. In the description below, "parts" are by weight unless otherwise specified.

<Example 1>

Using a reaction vessel equipped with a stirrer, while stirring, were heated the following at 90 °C for 3 hours: 90 parts of a liquid polysulfide polymer (thiol-bi-terminated polysulfide polymer), 6.7 parts of a bifunctional epoxy compound, 2 parts of a polyfunctional epoxy compound and 0.01 part of a basic catalyst. Subsequently, the reaction mixture was transferred to a second vessel and stored in an environment at 50 °C for 168 hours. By this, was synthesized an epoxy-bi-terminated polysulfide.

The reaction mixture was removed from the second vessel and was allowed to cool to room temperature. Subsequently, were added 1 part of a secondary bifunctional thiol compound, 1 part of a photobase generator, 0.5 part of a storage stabilizer and 30 parts of talc as filler. The resulting mixture was evenly kneaded, using a two-roll mill. Using a vacuum presser, the resulting mixture was shaped into sheets to obtain sealant sheets according to this Example. Here, were prepared two kinds, a 0.2 mm thick sheet and a 1 mm thick sheet.

The materials used are as follows:

Liquid polysulfide polymer: product name THIOKOL LP-55 (available from Toray Fine Chemicals, thiol-bi-terminated polysulfide, Mw 4000)

Bifunctional epoxy compound: product name jER806 (available from Mitsubishi Chemical, bisphenol F epoxy resin, epoxy equivalence 177 g/eq)

Polyfunctional epoxy compound: product name jER152 (available from Mitsubishi Chemical, phenol novolac epoxy resin, epoxy equivalence 176-178 g/eq)

Basic catalyst: 2,4,6-triaminomethyl-phenol (available from Tokyo Chemical Industry)

Secondary bifunctional thiol compound: product name KARENZ MT BD1 (available from Showa Denko K. K., 1,4-bis(3-mercaptobutyryloxy)butane, thiol equivalence 147.2 g/eq)

Photobase generator: product name WPBG-266 (available from FUJIFILM Wako Pure Chemical, biguanidic photobase generator)

Storage stabilizer: product name CUREDUCT L-07N (available from Shikoku Chemicals, boric acid ester compound)

Filler (talc): product name MICRO ACE SG-95 (available from Nippon Talc Co., Ltd., talc powder, mean particle diameter 2.5 $\mu$m)

The 0.2 mm thick sealant sheet was placed between two release liners to prepare a release-linered sealant sheet having a release liner on each face thereof. In particular, as the release liner placed on the photoirradiation side described later, was used a 50 $\mu$m thick release liner (available from NIPPA Corporation) formed of PET film having a release face on one side and having a light transmittance of 64.2 % at 365 nm wavelength. As the other release liner, was used a polyester release liner available from Mitsubishi Chemical Corporation.

With respect to the resulting sealant sheet, the storage modulus G' was determined by the method shown below. As a result, the storage modulus G' of the sealant sheet was in the range of 0.005 MPa to 0.8 MPa.

(Determination of storage modulus)

From the 1 mm thick sealant sheets, were punched out discs of 8 mm in diameter. Each disc was placed between parallel plates. Using a rheometer (model name ARES G2 available from TA Instruments Japan, Inc.), was determined the storage modulus G' at a measurement temperature of 25 °C, at a frequency of 1 Hz, at 0.5 % strain.

<Example 2>

As the release liner placed on the photoirradiation side described later, was used a release liner (available from Mitsubishi Chemical Corporation, 38 $\mu$m thick, 91 % light transmittance at 365 nm wavelength) formed of polyester film having a release face formed of a silicone-based release agent. Otherwise in the same manner as Example 1, was prepared a release-linered sealant sheet according to this Example.

<Examples 3 and 4>

As the release liner placed on the photoirradiation side described later, were used release liners (available from NIPPA Corporation) having the light transmittance values (at 365 nm wavelength) shown in Table 1. Otherwise in the same manner as Example 1, were prepared release-linered sealant sheets according to the respective Examples.

For the release liner's light transmittance (365 nm wavelength), using a UV-vis spectrophotometer (UV-2550 available from Shimadzu Corporation), the release liner was subjected to spectroscopic analysis and the value at 365 nm wavelength was recorded as the transmittance of the release liner.

[Tensile strength at break after photoirradiation]

With respect to the release-linered sealant sheet according to each Example, using a blacklight available from Toshiba Lighting & Technology Corporation, it was subjected to photoirradiation at 2000 mJ/cm$^2$ on the photoirradiation-side release liner. The irradiated sealant sheet was stored in an environment at 25 °C for 14 days. The resulting cured material (cured sealant) was then cut into a 10 mm wide, 50 mm long rectangle to prepare a sample piece. The sample piece was clamped in the chuck of a tensile tester at a chuck distance of 20 mm. Based on JIS K6767, the sample piece was stretched at a rate of 50 mm/min and the maximum strength observed before the sample piece broke was recorded as the strength at break. The results are shown in Table 1.

[Visibility of release liner]

The release-linered sealant sheet according to each Examples is cut into a 25 mm × 100mm size and laminated onto duralumin A2024. The resultant is placed 5 m away from a fluorescent lamp. At 1 m away from the release-linered sealant sheet, the release liner on the photoirradiation side was visually inspected and the release liner's visibility (whether or not the presence can be confirmed) was evaluated. When the release liner was visually confirmed, it was graded "G" (good); when visually not confirmed, it was graded "P" (poor).

[Table 1]

Table 1

|  | Release liner's % Transmittance at 365 nm | Post-photoirradiation sealant sheet's tensile strength at break (Mpa) | Visibility of release liner |
|---|---|---|---|
| Ex. 1 | 64.2 | 1.53 | G |
| Ex. 2 | 91 | 1.52 | P |
| Ex. 3 | 0.5 | 0.50 | G |
| Ex. 4 | 0.5 | 0.53 | G |

As shown in Table 1, in Examples 1 and 2 using release liners having 365 nm light transmittance values of 20 % or higher, through-liner photoirradiation to the sealant sheets resulted in cured sealants. In particular, the resulting cured sealants had tensile strength at break of 1.5 MPa or greater (the sealant sheets were cured to tensile strength at break of 1.5 MPa or greater). On the other hand, in Examples 3 and 4 using release liners with light transmittance below 20 %, the post-photoirradiation sealant sheets had tensile strength at break of about 0.5 MPa, showing poor curing. In Example 1 using a release liner with transmittance in the 20-80 % range, the sealant sheet was curable by through-liner photoirradiation and the release liner was readily visible on the sealant sheet. These results indicate that by using a release liner having a light transmittance of 20 % or higher in the 350-450 nm wavelength range, it is possible to obtain a release-linered photo-curable sealant sheet that can be easily handled and cured by through-liner photoirradiation. It is also evident that by using a release liner with 20-80 % light transmittance in the 350-450 nm wavelength range, the release-linered photo-curable sealant sheet can be cured by through-liner photoirradiation while forgetting of release liner removal can be prevented.

Although specific embodiments of the present invention have been described in detail above, these are merely for illustrations and do not limit the scope of claims. The art according to the claims includes various modifications and changes made to the specific embodiments illustrated above.

[Reference Signs List]

21 sealant sheet

21A first face

21B second face

31, 32 release liners

100, 200 release-linered sealant sheets

**Claims**

1. A release-linered sealant sheet comprising a photo-curable sealant sheet, and a release liner placed on at least one face of the sealant sheet, wherein
   the release liner has a light transmittance of 20 % or higher in the wavelength range from 350 nm to 450 nm.

2. The release-linered sealant sheet according to Claim 1, wherein the release liner has a light transmittance of 80 % or lower in the wavelength range from 350 nm to 450 nm.

3. The release-linered sealant sheet according to Claim 1 or 2, wherein the sealant sheet has a storage modulus of 0.005 MPa or greater and 0.8 MPa or less at 25 °C.

4. The release-linered sealant sheet according to any one of Claims 1 to 3, wherein the sealant sheet is formed of a polysulfide-based sealant.

5. The release-linered sealant sheet according to any one of Claims 1 to 4, wherein the sealant sheet comprises a photobase generator.

6. The release-linered sealant sheet according to Claim 5, wherein the photobase generator is an ionic photobase generator having a biguanidic cation.

7. The release-linered sealant sheet according to any one of Claims 1 to 6, wherein the sealant sheet comprises

   an epoxy group-containing polysulfide polymer (AB) having two or more epoxy groups per molecule; and
   a thiol compound (C) having two or more thiol groups per molecule.

8. A release-linered cured sealant having a cured sealant in sheet form, and a release liner placed on one face of the cured sealant, wherein
   the release liner has a light transmittance of 20 % or higher in the wavelength range from 350 nm to 450 nm.

9. A method comprising:

   a step of obtaining a release-linered sealant sheet including a photo-curable sealant sheet and a release liner placed on at least one face of the sealant sheet; and
   a step of subjecting the sealant sheet to photoirradiation through the release liner;
   wherein,
   the release liner has a light transmittance of 20 % or higher in the wavelength range from 350 nm to 450 nm.

10. The method according to Claim 9, the method further comprising:

    a step of removing the release liner of the release-linered sealant sheet from the sealant sheet, wherein
    the release liner has a light transmittance of 20 % to 80 % in the wavelength range from 350 nm to 450 nm.

[Fig. 1]

100

21B — — 32
— 21
21A — — 31

FIG.1

[Fig. 2]

200

21B — — 21
21A — — 31

FIG.2

## INTERNATIONAL SEARCH REPORT

| International application No. |
|---|
| PCT/JP2020/048506 |

### A. CLASSIFICATION OF SUBJECT MATTER
B32B 27/00(2006.01)i; C09K 3/10(2006.01)i; B32B 7/06(2019.01)i
FI: B32B27/00 B; B32B7/06; C09K3/10 F; C09K3/10 R
According to International Patent Classification (IPC) or to both national classification and IPC

### B. FIELDS SEARCHED

Minimum documentation searched (classification system followed by classification symbols)
B32B27/00; C09K3/10; B32B7/06

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/107486 A1 (NITTO DENKO CORP.) 06 June 2019 (2019-06-06) claims 1, 4, paragraphs [0037], [0063], [0066], fig. 1, 2 | 1-4, 7<br>3 |
| X<br>Y | JP 2001-89742 A (SEKISUI CHEMICAL CO., LTD.) 03 April 2001 (2001-04-03) claim 1, paragraphs [0028]-[0029] | 1-2, 8-10<br>3 |
| X | WO 2015/129624 A1 (LINTEC CORP.) 03 September 2015 (2015-09-03) claim 1, paragraphs [0055], [0114] | 1-2, 5-6, 8-10 |
| A | JP 2008-179668 A (KONISHI CO., LTD.) 07 August 2008 (2008-08-07) entire text | 1-10 |
| P, X | WO 2020/004487 A1 (NITTO DENKO CORP.) 02 January 2020 (2020-01-02) entire text | 1-10 |
| P, X | WO 2020/004488 A1 (NITTO DENKO CORP.) 02 January 2020 (2020-01-02) entire text | 1-10 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 February 2021 (17.02.2021) | 02 March 2021 (02.03.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**
Information on patent family members

International application No.

PCT/JP2020/048506

| Patent Documents referred in the Report | Publication Date | Patent Family | Publication Date |
|---|---|---|---|
| WO 2019/107486 A1 | 06 Jun. 2019 | (Family: none) | |
| JP 2001-89742 A | 03 Apr. 2001 | (Family: none) | |
| WO 2015/129624 A1 | 03 Sep. 2015 | TW 201544563 A | |
| JP 2008-179668 A | 07 Aug. 2008 | (Family: none) | |
| WO 2020/004487 A1 | 02 Jan. 2020 | (Family: none) | |
| WO 2020/004488 A1 | 02 Jan. 2020 | (Family: none) | |

Form PCT/ISA/210 (patent family annex) (January 2015)

**EP 4 082 777 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019235157 A
- JP 2006526693 A
- JP 2008530270 A